(19) Europäisches Patentamt
European Patent Office
Office européen des brevets

(11) **EP 1 135 425 B1**

(12) # EUROPÄISCHE PATENTSCHRIFT

(45) Veröffentlichungstag und Bekanntmachung des Hinweises auf die Patenterteilung:
**05.03.2003 Patentblatt 2003/10**

(21) Anmeldenummer: **99959283.5**

(22) Anmeldetag: **18.11.1999**

(51) Int Cl.$^7$: **C08G 18/62**, C09D 175/04, C08G 18/08, C08G 18/65

(86) Internationale Anmeldenummer:
**PCT/EP99/08855**

(87) Internationale Veröffentlichungsnummer:
**WO 00/032667 (08.06.2000 Gazette 2000/23)**

(54) **AUS MINDESTENS DREI KOMPONENTEN BESTEHENDES BESCHICHTUNGSMITTEL, VERFAHREN ZU SEINER HERSTELLUNG SOWIE SEINE VERWENDUNG**

COATING AGENT COMPRISED OF AT LEAST THREE CONSTITUENTS, METHOD FOR THE PRODUCTION THEREOF, AND ITS USE

AGENT DE REVETEMENT A AU MOINS TROIS COMPOSANTS, SON PROCEDE DE FABRICATION ET SON UTILISATION

(84) Benannte Vertragsstaaten:
**DE ES FR IT NL**

(30) Priorität: **30.11.1998 DE 19855167**

(43) Veröffentlichungstag der Anmeldung:
**26.09.2001 Patentblatt 2001/39**

(73) Patentinhaber: **BASF Coatings AG**
**48165 Münster (DE)**

(72) Erfinder:
- **LÖCKEN, Wilma**
  **D-45721 Haltern (DE)**
- **RINK, Heinz-Peter**
  **D-48153 Münster (DE)**

(74) Vertreter: **Fitzner, Uwe, Dr.**
**Dres. Fitzner & Münch**
**Rechts- und Patentanwälte**
**Lintorfer Strasse 10**
**40878 Ratingen (DE)**

(56) Entgegenhaltungen:
**EP-A- 0 409 301**
**EP-A- 0 516 277**
**EP-A- 0 530 806**
**DE-A- 19 618 446**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 135 425 B1

## Beschreibung

Gegenstand der vorliegenden Erfindung ist ein aus mindestens drei Komponenten bestehendes Beschichtungsmittel, enthaltend eine Komponente (I), enthaltend mindestens ein oligomeres oder polymeres Harz mit funktionellen Gruppen, die mit Isocyanatgruppen reagieren, als Bindemittel (A), eine Komponente (II), enthaltend mindestens ein Polyisocyanat als Vernetzungsmittel (F), und eine Komponente (III), welche Wasser enthält. Außerdem betrifft die vorliegende Erfindung ein Verfahren zur Herstellung dieser Beschichtungsmittel sowie die Verwendung der Beschichtungsmittel in der Autoserienlackierung, der Reparaturlackierung sowie für die Beschichtung von Kunststoffen sowie als Decklacke oder Füller.
Beschichtungsmittel der eingangs genannten Art sind aus den deutschen Patentschriften DE-A-195 42 626 oder DE-A-44 21 823 bekannt. Diese bekannten Beschichtungsmittel weisen bereits vergleichsweise geringe Oberflächenprobleme, wie Kocher oder Strukturen, sowie hinsichtlich des Glanzes, der Auspannung, der Spritzsicherheit, der Fülle, der Witterungsbeständigkeit und anderer wichtiger technologische Eigenschaften ein gutes Eigenschaftsprofil auf.
Die stetig strenger werdenden Anforderungen des Marktes machen es indes notwendig, daß diese bekannten Beschichtungsmittel in ihrer Homogenität, ihrer Standsicherheit, ihrer Handhabung und ihrer Kochergrenzen noch weiter verbessert werden. Außerdem soll der Lösemitteigehalt noch weiter abgesenkt werden, als dies bislang möglich war. Des weiteren sollen die resultierenden Beschichtungen eine noch höhere Benzinbeständigkeit und einen noch geringeren Grauschleier aufweisen.
Demgemäß wurde das neue, aus mindestens drei Komponenten bestehende Beschichtungsmittel, enthaltend

(I) eine Komponente, enthaltend mindestens ein oligomeres oder polymeres Harz mit funktionellen Gruppen, die mit Isocyanatgruppen reagieren, als Bindemittel (A),

(II) eine Komponente, enthaltend mindestens ein Polyisocyanat als Vernetzungsmittel (F), und

(III) eine Komponente, welche aus Wasser besteht oder Wasser und mindestens ein Bindemittel (A) enthält,

gefunden, welches dadurch gekennzeichnet ist, daß die Komponenten (I) und/oder (III) mindestens ein verzweigtes, cyclisches und/oder acyclisches $C_9$-$C_{10}$-Alkan enthalten, das mit mindestens zwei Hydroxylgruppen funktionalisiert ist.
Im folgenden wird das neue, aus mindestens drei Komponenten bestehende Beschichtungsmittel der Kürze halber als "erfindungsgemmäßes Beschichtungsmittel" bezeichnet.
Die vorliegende Erfindung betrifft außerdem ein Verfahren zur Herstellung der erfindungsgemäßen Beschichtungsmittel sowie deren Verwendung in der Autoserienlackierung, der Reparaturlackierung und der Beschichtung von Kunststoffen als Decklacke oder Füller.
Im Hinblick auf den Stand der Technik war es nicht zu erwarten, daß die Lösung der Aufgabe mit all ihren Vorteilen mit Hilfe der erfindungsgemäß zu verwendenden verzweigten, cyclischen und/oder acyclischen $C_9$-$C_{16}$-Alkanen, die mit mindestens zwei Hydroxylgruppen fünktionalisiert sind, erzielt werden konnte.
Im folgenden werden die erfindungsgemäß zu verwendenden verzweigten, cyclischen und/oder acyclischen $C_9$-$C_{16}$-Alkane, die mit mindestens zwei Hydroxylgruppen funktionalisiert sind, der Kürze halber als "funktionalisierte Alkane" bezeichnet.
Die erfindungsgemäßen Beschichtungsmittel zeichnen sich überraschenderweise durch ein Eigenschaftsprofil aus, das insbesondere hinsichtlich des Glanzes, der Fülle, der geringeren Kocherneigung der Spritzsicherheit und des Verlaufs sowie der Witterungsbeständigkeit gegenüber dem Stand der Technik verbessert ist.
Es ist außerdem überraschend, daß die erfindungsgemäßen Beschichtungsmittel aus den mindestens drei Komponenten durch einfaches Mischen hergestellt werden können, ohne daß aufwendige Apparaturen zum Mischen bzw. Dispergieren erforderlich sind, wie sie beispielsweise in der deutschen Patentschrift DE-A-195 10 651 beschrieben werden. Die erfindungsgemäßen Beschichtungsmittel eignen sich daher insbesondere auch für den Bereich der Autoreparaturlackierung, da sie vom Lackierer direkt vor ihrer Applikation durch einfaches Mischen der Komponenten hergestellt und bei niedrigen Temperaturen ausgehärtet werden können.
Vorteilhaft ist außerdem, daß die aus den mindestens drei Komponenten hergestellten, erfindungsgemäßen Beschichtungsmittel nur einen geringen Gehalt an flüchtigen organischen Lösemitteln aufweisen, obwohl die Beschichtungsmittel unter Verwendung organisch gelöster bzw. dispergierter Bindemittel und Vernetzer hergestellt werden.
Darüber hinaus gewährleisten die erfindungsgemäßen Beschichtungsmittel eine hohe Variabilität, da nicht nur für wäßrige Beschichtungsmittel empfohlene Vernetzungsmittel, Pigmente und Additive, sondern auch solche, die in konventionellen Systemen verwendet werden, eingesetzt werden können.
Schließlich zeichnen sich die erfindungsgemäßen Komponenten der erfindungsgemäßen Beschichtungsmittel durch eine sehr gute Lagerstabilität aus, die der von konventionellen Beschichtungsmitteln entspricht.

Der erfindungswesentliche Bestandteil der erfindungsgemäßen Beschichtungsmittel sind die funktionalisierten Alkane. Erfindungsgemäß sind sie in der nachstehend im Detail beschriebenen Komponenten (I) und/oder (III) enthalten. Wenn sie in der Komponente (I) vorliegen, ist es erfindungsgemäß von Vorteil, wenn sie hierin in einer Menge von 1 bis 80, vorzugsweise 5 bis 50 und insbesondere 10 bis 35 Gew.-%, jeweils bezogen auf die Gesamtmenge der nachstehend im Detail beschriebenen Bindemittel (A) und funktionalisierte Alkane, enthalten sind. Wenn sie in der Komponente (III) vorliegen, ist es erfindungsgemäß von Vorteil, sie hierin in einer Menge zu verwenden, daß im fertigen erfindungsgemäßen Beschichtungsmittel die vorstehend angegebenen Gewichtsverhältnisse resultieren. Erfindungsgemäß ist es von besonderem Vorteil, wenn die fünktionalisierten Alkane überwiegend oder nur in der Komponente (I) vorliegen.

Die erfindungswesentlichen fünktionalisierten Alkane leiten sich ab von verzweigten, cyclischen oder acyclischen Alkanen mit 9 bis 16 Kohlenstoffatomen, welche jeweils das Grundgerüst bilden.

Beispiele geeigneter Alkane dieser Art mit 9 Kohlenstoffatomen sind 2-Methyloctan, 4-Methyloctan, 2,3-Dimethyl-heptan, 3,4-Dimethyl-heptan, 2,6-Dimethyl-heptan, 3,5-Dimethyl-heptan, 2-Methyl-4-ethyl-hexan oder Isopropylcyclohexan.

Beispiele geeigneter Alkane dieser Art mit 10 Kohlenstoffatomen sind 4-Ethyloctan, 2,3,4,5-Tetramethyl-hexan, 2,3-Diethyl-hexan oder 1-Methyl-2-n-propyl-cyclohexan.

Beispiele geeigneter Alkane dieser Art mit 11 Kohlenstoffatomen sind 2,4,5,6-Tetramethyl-heptan oder 3-Methyl-6-ethyl-octan.

Beispiele geeigneter Alkane dieser Art mit 12 Kohlenstoffatomen sind 4-Methyl-7-ethyl-nonan, 4,5-Diethyl-octan, 1'-Ethyl-butyl-cyclohexan, 3,5-Diethyl-octan oder 2,4-Diethyl-octan.

Beispiele geeigneter Alkane dieser Art mit 13 Kohlenstoffatomen sind 3,4-Dimethyl-5-ethyl-nonan oder 4,6-Dimethyl-5-ethyl-nonan.

Ein Beispiel eines geeigneten Alkans dieser Art mit 14 Kohlenstoffatomen ist 3,4-Dimethyl-7-ethyl-decan.

Beispiele geeigneter Alkane dieser Art mit 15 Kohlenstoffatomen sind 3,6-Diethyl-undecan oder 3,6-Dimethyl-9-ethyl-undecan.

Beispiele geeigneter Alkane dieser Art mit 16 Kohlenstoffatomen sind 3,7-Diethyl-dodecan oder 4-Ethyl-6-isopropyl-undecan.

Von diesen Grundgerüsten sind die Alkane mit 10 bis 14 und insbesondere 12 Kohlenstoffatomen besonders vorteilhaft und werden deshalb bevorzugt verwendet. Von diesen sind wiederum die Octanderivate ganz besonders vorteilhaft.

Für die vorliegende Erfindung ist es von Vorteil, wenn die funktionalisierten Alkane, welche sich von diesen verzweigten, cyclischen oder acyclischen Alkanen als Grundgerüsten ableiten, bei Raumtemperatur flüssig sind. Somit werden bevorzugt entweder einzelne flüssige funktionalisierte Alkane verwendet oder flüssige Gemische dieser Verbindungen. Dies ist insbesondere dann der Fall, wenn funktionalisierte Alkane verwendet werden, welche wegen ihrer hohen Anzahl an Kohlenstoffatomen im Alkan-Grundgerüst als einzelne Verbindungen fest sind. Der Fachmann kann daher die entsprechenden funktionalisierten Alkane in einfacher Weise auswählen.

Für die Erfindung ist es vorteilhaft, wenn die funktionalisierten Alkane einen Siedepunkt von über 200, vorzugsweise 220 und insbesondere 240°C aufweisen. Darüberhinaus sollen sie eine niedrige Verdampfungsrate haben.

Für die erfindungsgemäßen Beschichtungsmittel ist es von Vorteil, wenn die funktionalisierten Alkane acyclisch sind.

Die funktionalisierten Alkane weisen im allemeinen primäre und/oder sekundäre Hydroxylgruppen auf. Für die erfindungsgemäßen Beschichtungsmittel ist es von Vorteil, wenn primäre und sekundäre Gruppen in einer Verbindung vorhanden sind.

Bei den funktionalisierten Alkanen handelt es sich demnach um Polyole. Besondere Vorteile ergeben sich, wenn sie Diole und/oder Triole, insbesondere aber Diole sind. Diese werden ganz besonders bevorzugt verwendet.

Ganz besonders vorteilhafte erfindungsgemäße Beschichtungsmittel werden erhalten, wenn die Diole stellungsisomere Dialkyloctandiole, insbesondere Diethyloctandiole, sind. Herausragende Ergebnisse werden mit 2,4-Diethyl-octandiol-1,5 erzielt.

Die vorstehend beschriebenen funktionalisierten Alkane sind an sich bekannte Verbindungen und können mit Hilfe üblicher und bekannter Synthesemethoden der Organischen Chemie wie die basenkatalysierte Aldolkondensation hergestellt werden oder sie fallen als Nebenprodukte chemischer Großsynthesen wie der Herstellung von 2-Ethylhexanol an.

Der weitere wesentliche Bestandteil der Komponente (I) des erfindungsgemäßen Beschichtungsmittels ist mindestens ein in einem oder mehreren organischen, gegebenenfalls wasserverdünnbaren Lösemitteln gelöstes oder dispergiertes, oligomeres oder polymeres Harz mit funktionellen Gruppen, die mit Isocyanatgruppen reagieren, als Bindemittel (A).

Beispiele geeigneter erfindungsgemäß zu verwendender funktioneller Gruppen, die mit Isocyanatgruppen reagieren, sind Amino-, Thio- und/oder Hydroxxylgruppen, von denen die Hydroxylgruppen besonders vorteilhaft sind

und daher erfindungsgemäß besonders bevorzugt werden.

Somit handelt es sich bei den erfindungsgemäß bevorzugten Bindemittel (A) um hydroxylgruppenhaltige oligomere oder polymere Harze.

Beispiele geeigneter erfindungsgemäß bevorzugter Bindemittel (A) sind hydroxylgruppenhaltige lineare und/oder verzweigte und/oder blockartig, kammartig und/oder statistisch aufgebaute Poly(meth)acrylate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, von denen die Poly(meth)acrylate, die Polyester, die Polyurethane, die Polyether und die Epoxidharz-Amin-Addukte besonders vorteilhaft sind und deshalb besonders bevorzugt verwendet werden.

Hinsichtlich der Herstellbarkeit, der Handhabung und der besonders vorteilhaften Eigenschaften der hiermit hergestellten erfindungsgemäßen Beschichtungsmittel bieten die Poly(meth)acrylate, die Polyester und/oder die Polyurethane ganz besondere Vorteile, weswegen sie erfindungsgemäß ganz besonders bevorzugt verwendet werden.

Neben dem Hydroxylgruppen können diese Bindemittel (A) noch andere funktionelle Gruppen wie Acryloyl-, Amid -, Imid -, Carbonat- oder Epoxidgruppen enthalten.

Erfindungsgemäß ist es desweiteren von Vorteil, wenn mindestens eines der in der Komponente (I) jeweils angewandten oder alle der in der Komponente (I) jeweils angewandten Bindemittel (A) für sich gesehen in Wasser löslich oder dispergierbar sind.

Beispiele geeigneter wasserlöslicher oder -dispergierbarer Bindemittel enthalten entweder

(i) funktionelle Gruppen, die durch Neutralisationsmittel und/oder Quaternisierungsmittel in Kationen überführt werden können, und/oder kationische Gruppen
oder

(ii) funktionelle Gruppen, die durch Neutralisationsmittel in Anionen überführt werden können, und/oder anionische Gruppen
und/oder

(iii) nichtionische hydrophile Gruppen.

Beispiele geeigneter erfindungsgemäß zu verwendender funktioneller Gruppen, die durch Neutralisationsmittel und/oder Quaternisierungsmittel in Kationen überführt werden können, sind primäre, sekundäre oder tertiäre Aminognippen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber tertiäre Sulfoniumgruppen.

Beispiele geeigneter erfindungsgemäß zu verwendender funktioneller Gruppen, die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen sind Carboxylat-, Sulfonat- oder Phosphonatgruppen, insbesondere Carboxylatgruppen.

Beispiele geeigneter erfindungsgemäß zu verwendender nichtionischer hydrophiler Gruppen sind Polyethergrupppen, insbesondere Poly(alkylenether)gruppen.

Hinsichtlich der Herstellbarkeit, der Handhabung und der besonders vorteilhaften Eigenschaften der hiermit hergestellten erfindungsgemäßen Beschichtungsmittel bieten die Bindemittel (A), welche die anionenbildenden Gruppen und/oder Anionen (ii), insbeondere die Carbonsäure- und/oder die Carboxylatgruppen enthalten, ganz besondere Vorteile, weswegen sie erfindungsgemäß ganz besonders bevorzugt verwendet werden.

Beispiele ganz besonders bevorzugter erfindungsgemäß zu verwendender Bindemittel (A) der letztgenannten Art sind

(A1) in einem oder mehreren organischen, gegebenenfalls wasserverdünnbaren Lösemitteln lösliche oder dispergierbare, Hydroxylgruppen und Carbonsäure- und/oder Carboxlylatgruppen enthaltende Acrylatcopolymerisate (A1) mit einem zahlenmittleren Molekulargewicht Mn zwischen 1.000 und 30.000 Dalton, einer OH-Zahl von 40 bis 200 mg KOH/g und einer Säurezahl von 5 bis 150 mg KOH/g,

(A2) in einem oder mehreren organischen, gegebenenfalls wasserverdünnbaren Lösemitteln lösliche oder dispergierbare, Hydroxylgruppen und Carbonsäure- und/oder Carboxlylatgruppen enthaltende Polyesterharze (A2) mit einem zahlenmittleren Molekulargewicht Mn zwischen 1.000 und 30.000 Dalton, einer OH-Zahl von 30 bis 250 mg

KOH/g und einer Säurezahl von 5 bis 150 mg KOH/g und/oder

(A3) in einem oder mehreren organischen, gegebenenfalls wasserverdünnbaren Lösemitteln lösliche oder dispergierbare, Hydroxylgruppen und Carbonsäure- und/oder Carboxlylatgruppen enthaltende Polyurethanharze (A3) mit einem zahlenmittleren Molekulargewicht Mn zwischen 1.000 und 30.000 Dalton, einer OH-Zahl von 20 bis 200 mg KOH/g und einer Säurezahl von 5 bis 150 mg KOH/g.

Die Bindemittel (A1), (A2) und (A3) liegen einzeln oder als Gemisch in der Komponente (I) vor, wobei diese gegebenenfalls noch mindestens eines der vorstehend beschriebenen Bindemittel (A) enthalten, ausgenommen derjenigen Bindemittel (A), welche funktionelle Gruppen (i), die durch Neutralisationsmittel und/oder Quaternisierungsmittel in Kationen überführt werden können, und/oder kationische Gruppen (i) enthalten. Im folgenden werden diese mit den Bindemitteln (A1), (A2) und/oder (A3) gegebenenfalls verwendbaren Bindemittel (A) als Bindemittel (A4) bezeichnet.

Erfindungsgemäß bieten die Komponenten (I), welche die Bindemitteln (A1), (A2) und/oder (A3) sowie gegebenenfalls (A4) enthalten, ganz besondere Vorteile und werden deshalb ganz besonders bevorzugt verwendet.

Desgleichen weisen die erfindungsgemäßen Beschichtungsmittel, welche diese ganz besonders bevorzugte Komponente (I) enthalten, ganz besondere Vorteile auf und werden deshalb ganz besonders bevorzugt verwendet.

Wenn die Vermischung der Komponenten (I), (II) und (III) durch manuelles Rühren erfogen soll, ist es für das erfindungsgemäße Beschichtungsmittel von Vorteil, wenn die Bindemittel (A), insbesondere die Bindemittel (A1), (A2) und/oder (A3) und (A4), so ausgewählt werden, daß ihre 50 %ige Lösung des Bindemittels (A) in Ethoxyethylpropionat bei 23°C eine Viskosität von ≤ dPas aufweist. Sofern eine maschinelle Vermischung erfolgen soll, können höherviskose Bindemittel (A) verwendet werden, deren 50 %ige Lösung in Ethoxyethylpropionat bei 23°C eine Viskosität von ≤ 100 dPas aufweist. Die Viskosität wird nach oben lediglich durch die Leistungsfähigkeit der Mischaggregate begrenzt.

Als Acrylatcopolymerisate (A1) sind alle Acrylatcopolymerisate mit den angegebenen OH-Zahlen, Säurezahlen, Molekulargewichten und Viskositäten geeignet.

Insbesondere werden Acrylatcopolymerisate (A1) eingesetzt, die erhältlich sind durch Polymerisation in einem organischen Lösemittel oder einem Lösemittelgemisch und in Gegenwart mindestens eines Polymerisationsinitiators von

a1) einem von (a2), (a3), (a4), (a5) und (a6) verschiedenen, mit (a2), (a3), (a4), (a5) und (a6) copolymerisierbaren, im wesentlichen säuregruppenfreien (Meth)acrylsäureester oder einem Gemisch aus solchen Monomeren,

a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen säuregruppenfrei ist, oder einem Gemisch aus solchen Monomeren,

a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren und

a4) gegebenenfalls einem oder mehreren Vinylestern von in alpha-Stellung verzweigten Monocarbonsäuren mit 5 bis 18 C-Atomen je Molekül und/oder

a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,

a6) gegebenenfalls einem mit (a1), (a2), (a3), (a4), und (a5) copolymerisierbaren, von (a1), (a2), (a4) und (a5) verschiedenen, im wesentlichen säuregruppenfreien, ethylenisch ungesättigten Monomer oder einem Gemisch aus solchen Monomeren,

wobei (a1), (a2), (a3), (a4), (a5) und (a6) in Art und Menge so ausgewählt werden, daß das Polyacrylatharz (A1) die gewünschte OH-Zahl, Säurezahl und das gewünschte Molekulargewicht aufweist.

Zur Herstellung der erfindungsgemäß eingesetzten Polyacrylatharze kann als Komponente (a1) jeder mit (a2), (a3), (a4), (a5) und (a6) copolymerisierbare (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-,

Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder - oxacycloalkylester wie Ethyltriglykol(meth)acrylat und Methoxyoligoglykol(meth) acrylat mit einem Molekulargewicht Mn von vorzugsweise 550; oder andere ethoxylierte und/oder propoxylierte hydroxylgruppenfreie (Meth)acrylsäurederivate; verwendet werden. Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-lH-inden-dimethanol- oder Cyclohexan-1,2-, -1,3- oder - 1,4-diol-di(meth)acrylat;Trimethylolpropan-di- oder -tri(meth)acrylat; oder Pentaerythrit-di-, -tri- oder -tetra(meth)acrylat; enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Polyacrylatharze führen.

Als Komponente (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen säuregruppenfrei sind, wie Hydroxyalkylester der Acrylsäure, Methacrylsäure oder einer anderen alpha, beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; 1,4-Bis(hydroxymethyl)cyclohexan-, Octahydro-4,7-methano-1H-inden-dimethanol- oder Methylpropandiolmonoacrylat, -monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkylestern; oder olefinisch ungesättigte Alkohole wie Allylalkohol oder Polyole wie Trimethylolpropanmono- oder diallylether oder Pentaerythritmono-, -di- oder -triallylether; verwendet werden. Hinsichtlich dieser höherfunktionellen Monomeren (a2) gilt das für die höherfunktionellen Monomeren (a1) Gesagte sinngemäß. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Komponente (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren verwendet werden. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Komponente (a3) verwendet werden. Als Komponente (a3) kommen desweiteren Maleinsäuremono(meth)acryloyloxyethylester, Bernsteinsäuremono(meth)acryloyloxyethylester und Phthalsäuremono(meth)acryloyloxyethylester in Betracht.

Als Komponente (a4) werden ein oder mehrere Vinylester von in alpha-Stellung verzweigten Monocarbonsäuren mit 5 bis 18 C-Atomen im Molekül eingesetzt. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

Als Komponente (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Komponente (a6) können alle mit (a1), (a2), (a3), (a4) und (a5) copolymerisierbaren, von (a1), (a2), (a3) und (a4) verschiedenen, im wesentlichen säuregruppenfreien ethylenisch ungesättigten Monomere oder Gemische aus solchen Monomeren verwendet werden. Als Komponente (a6) kommmen

- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;

- (Meth)Acrylsäureamide wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- und/oder N,N-Cyclohexyl-methyl-(meth)acrylsäureamid;

- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;

- vinylaromatische Kohlenwasserstoffe, wie Styrol, alpha-Alkylstyrole, insbesondere alpha-Methylstyrol, und/oder Vinyltoluol;

- Nitrile wie Acrylnitril und/oder Methacrylnitril;

- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat und/oder der Vinylester der 2-Methyl-2-ethylheptansäure; und/oder

- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth) acrylsäure;

in Betracht.
Vorzugsweise werden vinylaromatische Kohlenwasserstoffe eingesetzt.
Es ist von Vorteil, die Polysiloxanmakromonomeren (a6) zusammen mit anderen Monomeren (a6) verwenden. Hierbei soll die Menge des oder der Polysiloxanmakromonomeren (a6) zur Modifizierung der Acrylatcopolymerisate (A1) weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (A1) eingesetzten Monomeren, betragen. Die Verwendung derartiger Polysiloxanmakromonomerer führt zu einer Verbesserung des Slips der erfindungsgemäßen Beschichtungen.
Die Art und Menge der Komponenten (a1) bis (a6) wird so ausgewählt, daß das Polyacrylatharz (A1) die gewünschte OH-Zahl, Säurezahl und Glasübergangstemperatur aufweist. Besonders bevorzugt eingesetzte Acrylatharze werden erhalten durch Polymerisation von

(a1) 20 bis 60 Gew.-%, bevorzugt 30 bis 50 Gew.-%, der Komponente (a1),

(a2) 10 bis 50 Gew.-%, bevorzugt 15 bis 40 Gew.-%, der Komponente (a2),

(a3) 1 bis 15 Gew.-%, bevorzugt 1 bis 8 Gew.-%, der Komponente (a3),

(a4) 0 bis 25 Gew.-%, bevorzugt 5 bis 15 Gew.-%, der Komponente (a4),

(a5) 0 bis 25 Gew.-%, bevorzugt 5 bis 15 Gew.-%, der Komponente (a5) und

(a6) 5 bis 30 Gew.-%, bevorzugt 10 bis 20 Gew.-%, der Komponente (a6),

wobei die Summe der Gewichtsanteile der Komponenten (a1) bis (a6) jeweils 100 Gew.-% beträgt.

Die Herstellung der erfindungsgemäß eingesetzten Polyacrylatharze (A1) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Dabei können die Lösemittel an der Reaktion mit der vernetzenden Komponente (II) teilnehmen und somit als Reaktivverdünner wirken.

Beispiele geeigneter Reaktiverdünner sind die funktionalisierten Alkane.

Weitere Beispiele geeigneter Reaktiverdünner sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cyclooocten, Cyclohepten, Norbonen oder 7- Oxanorbonen; Beispiele geeigneter acyclischer Monoolefine sind in Kohlenwasserstoffgemischen enthalten, die in der Erdölverarbeitung durch Cracken erhalten werden ($C_5$-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht Mw von 600 bis 1100 auf;

Weitere Beispiele geeigneter Reaktivverdünner sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bishydroxymethyl-butandiol-(1,4) (Homopentaerythrit). Die Herstellung dieser Reaktivverdünner kann nach den üblichen und bekannten Methoden der Herstellung hyperverzweigter und dendrimer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Weitere Beispiele geeigneter Reaktivverdünner sind Polycarbonatdiole, Polyesterpolyole, Poly(meth)acrylatdiole oder hydroxylgruppenhaltige Polyadditionsprodukte.

Beispiele geeigneter isocyanatreaktiver Lösemittel, welche als monofunktionelle Reaktivverdünner angesehen werden können, sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, Trimethylolpropan, 2-Hydroxypropionsäureethylester oder 3-Methyl-3-methoxybutanol sowie Derivate auf Basis von Propylenglykol, z.B. Ethoxyethylpropionat, Isopropoxypropanol oder Methoxypropylacetat genannt.

Die genannten Reaktivverdünner, insbesondere die funktionalisierten Alkane, und/oder die isocanatreaktiven Lösemittel können auch in der Komponente (III) vorhanden sein.

Es ist dabei auch möglich, die Polyacrylatarze (A1) zunächst in einem Lösemittel, das nicht wasserverdünnbar ist, herzustellen und dieses Lösemittel nach der Polymerisation gegebenenfalls teilweise durch wasserverdünnbares Lösemittel zu ersetzen.

Beispiele geeigneter Polymerisationsinitiatoren sind freie Radikale bildende Initiatoren, wie z.B. tert.-Butylperoxyethylhexanoat, Benzoylperoxid, Di-tert.-Amylperoxid, Azobisisobutyronitril und tert.-Butylperbenzoat genannt. Die Initiatoren werden bevorzugt in einer Menge von 1 bis 25 Gew.-%, besonders bevorzugt von 2 bis 10 Gew.-%, bezogen auf das Gesamtgewicht der Monomeren, eingesetzt.

Die Polymerisation wird zweckmäßigerweise bei einer Temperatur von 80 bis 200°C, vorzugsweise 110 bis 180°C, durchgeführt. Bevorzugt werden als Lösemittel Ethoxyethylpropionat und Isopropoxypropanol eingesetzt.

Bevorzugt wird das Polyacrylatharz (A1) nach einem Zweistufenverfahren hergestellt, da so die resultierenden erfindungsgemäßen Beschichtungsmittel eine bessere Verarbeitbarkeit aufweisen. Bevorzugt werden daher Polyacrylatharze eingesetzt, die erhältlich sind, indem

1. ein Gemisch aus (a1), (a2), (a4), (a5) und (a6) oder ein Gemisch aus Teilen der Komponenten (a1), (a2), (a4), (a5) und (a6) in einem organischen Lösemittel und/oder in einem der vorstehend genannten Reaktivverdünner polymerisiert wird,

2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und

3. nach Beendigung der Polymerisation das erhaltene Polyacrylatharz gegebenenfalls zumindest teilweise neutralisiert wird, d.h. die Säuregruppen in die entsprechende Säureaniongruppen überführt werden.

Daneben ist es aber auch möglich, die Komponenten (a4) und/oder (a5) zusammen mit zumindest einem Teil des Lösemittels vorzulegen und die restlichen Komponenten zuzudosieren. Außerdem können auch die Komponenten

(a4) und/oder (a5) nur teilweise zusammen mit zumindest einem Teil des Lösemittels in die Vorlage gegeben werden und der Rest dieser Komponenten wie oben beschrieben zugegeben werden. Bevorzugt werden beispielsweise mindestens 20 Gew.-% des Lösemittels und ca. 10 Gew.-% der Komponente (a4) und (a5) sowie gegebenenfalls Teilen der Komponenten (a1) und (a6) vorgelegt.

Bevorzugt ist außerdem die Herstellung der erfindungsgemäß eingesetzten Polyacrylatharze (A1) durch ein Zweistufenverfahren, bei dem die erste Stufe 1 bis 8 Stunden, vorzugsweise 1,5 bis 4 Stunden, dauert und die Zugabe der Mischung aus (a3) und dem gegebenenfalls vorhandenen Rest der Komponenten (a1), (a2), (a4), (a5) und (a6) innerhalb von 20 bis 120 Minuten, vorzugsweise innerhalb von 30 bis 90 Minuten, erfolgt. Nach Beendigung der Zugabe der Mischung aus (a3) und dem gegebenenfalls vorhandenen Rest der Komponenten (a1), (a2), (a4), (a5) und (a6) wird so lange weiter polymerisiert, bis alle eingesetzten Monomeren im wesentlichen vollständig umgesetzt worden sind. Hierbei kann sich die zweite Stufe unmittelbar der ersten anschließen. Indes kann mit der zweiten Stufe erst nach einer gewissen Zeit, beispielsweise nach 10 min bis 10 Stunden, begonnen werden.

Die Menge und Zugabegeschwindigkeit des Initiators wird vorzugsweise so gewählt, daß ein Polyacrylatharz (A1) mit einem zahlenmittleren Molekulargewicht Mn von 1000 bis 30.000 Dalton erhalten wird. Es ist bevorzugt, daß mit dem Initiatorzulauf einige Zeit, im allgemeinen *ca.* 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Bevorzugt werden die Monomeren zur Herstellung der Polyacrylatharze (A1) bei einem nicht allzu hohen Polymerisationsfestkörper, bevorzugt bei einem Polymerisationsfestkörper von 80 bis 50 Gew.-%, bezogen auf die Comonomeren, polymerisiert und anschließend die Lösemittel teilweise destillativ entfernt, so daß die entstehenden Polyacrylatharzlösungen (A1) einen Festkörpergehalt von bevorzugt 100 bis 60 Gew.-% aufweisen.

Die Herstellung der erfindungsgemäß zu verwendende Polyacrylatharze (A1) weist keine methodischen Besonderheiten auf, sondern erfolgt mit Hilfe der auf dem Kunststoffgebiet üblichen und bekannten Methoden der kontinuierlichen oder diskontinuierlichen Copolymerisation unter Normaldruck oder Überdruck in Rührkesseln, Autoklaven, Rohrreaktoren oder Taylorreaktoren.

Beispiele geeigneter (Co)Polymerisationsverfahren werden in den Patentschriften DE-A-197 09 465, DE-C-197 09 476, DE-A-28 48 906, DE-A-195 24 182, EP-A-0 554 783, WO 95/27742 oder WO 82/02387 beschrieben.

Erfindungsgemäß sind Taylorreaktoren vorteilhaft und werden deshalb für das erfindungsgemäße Verfahren bevorzugt verwendet.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität $\nu$ des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i \, r_i \, d \, \nu^{-1} (d/r_i)^{1/2}$$

$$\text{mit } d = r_a - r_i. \qquad \text{(I)}$$

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen-

zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungssystem verhält sich somit wie ein ideales Strömungsrohr, indem die Wirbelpaare mit konstanter Verweilzeit wie ideale Rührkessel durch den Spalt wandern.

Erfindungsgemäß von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Als Polyester (A2) sind alle Polyester mit den vorstehend angegebenen OH-Zahlen, Säurezahlen, Molekulargewichten und Viskositäten geeignet.

Insbesondere werden Polyester (A2) eingesetzt, die erhältlich sind durch Umsetzung von

p1) gegebenenfalls sulfonierten Polycarbonsäuren oder deren veresterungsfähigen Derivaten, gegebenenfalls zusammen mit Monocarbonsäuren,

p2) Polyolen, gegebenenfalls zusammen mit Monoolen,

p3) gegebenenfalls weiteren modifizierenden Komponenten und

p4) gegebenenfalls einer mit dem Reaktionsprodukt aus (p1), (p2) und gegebenenfalls (p3) reaktionsfähigen Komponente.

Als Beispiele für Polycarbonsäuren, die als Komponente (p1) eingesetzt werden können, seien aromatische, aliphatische und cycloaliphatische Polycarbonsäuren genannt. Bevorzugt werden als Komponente (p1) werden aromatische und/oder aliphatische Polycarbonsäuren eingesetzt.

Beispiele für geeignete Polycarbonsäuren sind Phthalsäure, Isophthalsäure, Terephthalsäure, Phthalsäure-, Isophthalsäure- oder Terephthalsäuremonosulfonat, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure oder Cyclobutantetracarbonsäure. Die cycloaliphtatischen Polycarbonsäuren können sowohl in ihrer cis- als auch in ihrer trans-Form sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure und Fettsäuren natürlich vorkommender Öle. Bevorzugt wird als Monocarbonsäure Isononansäure eingesetzt.

Geeignete Alkoholkomponenten (p2) zur Herstellung des Polyesters (A2) sind mehrwertige Alkohole, wie Ethylenglykol, Propandiole, Butandiole, Hexandiole, Hydroxypivalinsäureneopentylester, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Dipentaerythrit, Trishydroxiethylisocyanat, Polyethylenglykol, Polypropylenglykol, gegebenenfalls zusammen mit einwertigen Alkoholen, wie beispielsweise Butanol, Octanol, Laurylalkohol, Cyclohexanol, tert.-Butylcyclohexanol, ethoxylierten bzw. propoxylierten Phenolen.

Als Komponente (p3) zur Herstellung der Polyester (A2) geeignet sind insbesondere Verbindungen, die eine gegenüber den funktionellen Gruppen des Polyesters reaktive Gruppe aufweisen, ausgenommen die als Komponente (p4) genannten Verbindungen. Als modifizierende Komponente (p3) werden bevorzugt Polyisocyanate und/oder Diepoxydverbindungen, gegebenenfalls auch Monoisocyanate und/oder Monoepoxydverbindungen verwendet. Geeignete Komponenten (p3) sind beispielsweise in der DE-A-40 24 204 auf Seite 4, Zeilen 4 bis 9, beschrieben.

Als Komponente (p4) zur Herstellung der Polyester (A2) geeignet sind Verbindungen, die außer einer gegenüber den funktionellen Gruppen des Polyesters (A2) reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Die Herstellung der Polyester (A2) erfolgt nach den bekannten Methoden der Veresterung, wie dies beispielsweise in der DE-A-40 24 204, Seite 4, Zeilen 50 bis 65, beschrieben ist.
Die Umsetzung erfolgt dabei üblicherweise bei Temperaturen zwischen 180 und 280°C, gegebenenfalls in Gegenwart eines geeigneten Veresterungskatalysators, wie z.B. Lithiumoctoat, Dibutylzinnoxid, Dibutylzinndilaurat oder para-Toluolsulfonsäure.

Üblicherweise wird die Herstellung der Polyester (A2) in Gegenwart geringer Mengen eines geeigneten Lösemittels als Schleppmittel durchgeführt. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Besonders bevorzugt werden als Komponente (A2) Polyester eingesetzt, die nach einem zweistufigen Verfahren hergestellt worden sind, indem zunächst ein hydroxylgruppenhaltiger Polyester mit einer OH-Zahl von 100 bis 300 mgKOH/g, einer Säurezahl von weniger als 10 mgKOH/g und einem zahlenmittleren Molekulargewicht Mn von 500 bis 2000 Dalton hergestellt wird, der dann in einer zweiten Stufe mit Carbonsäureanhydriden zu dem gewünschten Polyester (A2) umgesetzt wird. Die Menge an Carbonsäureanhydriden wird dabei so gewählt, daß der erhaltene Polyester die gewünschte Säurezahl aufweist. Für diese Umsetzung sind alle üblicherweise eingesetzten Säureanhydride, wie z.B. Hexahydrophthalsäureanhydrid, Trimellithsäureanhydrid, Pyromellithsäureanhydrid, Phthalsäureanhydrid, Camphersäureanhydrid, Tetrahydrophthalsäureanhydrid, Bernsteinsäureanhydrid und Gemische dieser und/oder anderer Anhydride und insbesondere Anhyride aromatischer Polycarbonsäuren, wie Trimellithsäureanhydrid, geeignet.

Es ist gegebenenfalls möglich, daß das Polyacrylatharz (A1) zumindest teilweise in Gegenwart des Polyesters (A2) hergestellt worden ist. Vorteilhafterweise werden in diesem Fall mindestens 20 Gew.-% und besonders vorteilhafterweise 40 bis 80 Gew.-% der Komponente (A1) in Gegenwart der Komponente (A2) hergestellt.
Die gegebenenfalls restlich vorhandene Menge der Komponente (A1) wird der Bindemittellösung anschließend zugegeben. Dabei ist es möglich, daß dieses bereits polymerisierte Harz die gleiche Monomerzusammensetzung aufweist wie das in Gegenwart des Polyesters aufgebaute Polyacrylatharz. Es kann aber auch ein hydroxylgruppenhaltiges Polyacrylatharz mit einer unterschiedlichen Monomerzusammensetzung zugefügt werden. Außerdem ist es möglich, eine Mischung verschiedener Polyacrylatharze und/oder Polyester zuzufügen, wobei gegebenenfalls ein Harz die gleiche Monomerzusammensetzung aufweist wie das in Gegenwart des Polyesters aufgebaute Polyacrylatharz.

Als hydroxyl- und säuregruppenhaltiges erfindungsgemäß zu verwendendes Polyurethanharz (A3) sind alle Polyurethanharze mit den angegebenen OH-Zahlen, Säurezahlen, Molekulargewichten und Viskositäten geeignet.

Geeignete Polyurethanharze werden beispielsweise in den folgenden Schriften beschriebenen: EP-A-355 433, DE-A-35 45 618, DE-A-38 13 866. DE-A-32 10 051, DE-A-26 24 442, DE-A-37 39 332, US-A-4,719,132, EP-A-89 497, US-A-4,558,090, US-A-4,489,135, DE-A-36 28 124, EP-A-158 099, DE-A-29 26 584, EP-A-195 931, DE-A-33 21 180 und DE-A-40 05 961.

In der Komponente (I) werden vorzugsweise Polyurethanharze eingesetzt, die durch Umsetzung von isocyanatgruppenhaltigen Präpolymeren mit gegenüber Isocyanatgruppen reaktiven Verbindungen herstellbar sind.

Die Herstellung von isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150°C, bevorzugt 50 bis 130°C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolokular sein und reaktionsträge anionische bzw. zur Anionenbildung befähigte Gruppen enthalten. Es können auch niedermolekulare Polyole mit einem Molekulargewicht von 60 bis zu 400 Dalton, zur Herstellung der isocyanatgruppenhaltigen Präpolymere mitverwendet werden. Es werden dabei Mengen von bis zu 30 Gew.-% der gesamten Polyol-Bestandteile, bevorzugt etwa 2 bis 20 Gew.-%, eingesetzt.

Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer zahlenmittleren Molerkulargewicht Mn von 400 bis 5000 Dalton bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden.

Bevorzugt besteht die zur Herstellung der Polyurethanharze eingesetzte Alkoholkomponente zumindest zu

einem gewissen Anteil aus

$u_1$) mindestens einem Diol der Formel (I')

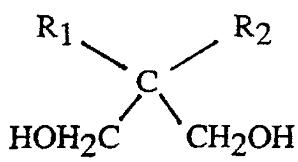

(I'),

in der $R_1$ und $R_2$ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß $R_1$ und/oder $R_2$ nicht Methyl sein darf, und/oder

$u_2$) mindestens einem Diol der Formel (II')

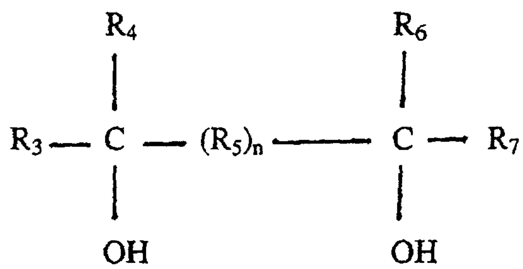

(II'),

in der $R_3$, $R_4$, $R_6$ und $R_7$ jeweils gleiche oder verschiedene Reste darstellen und für einen Alkylrest mit 1 bis 6 C-Atomen, einen Cycloalkylrest oder einen Arylrest stehen und $R_5$ einen Alkykest mit 1 bis 6 C-Atomen, einen Arylrest oder einen ungesättigten Alkylrest mit 1 bis 6 C-Atomen darstellt, und n entweder 0 oder 1 ist.

Als Diole ($u_1$) sind alle Propandiole der Formel (I') geeignet, bei denen entweder $R_1$ oder $R_2$ oder $R_1$ und $R_2$ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclo-hexyl-2-methylpropandiol-1,3 und andere.

Als Diole ($u_2$) (Formel (II')) können beispielsweise 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Bevorzugt werden als Diole ($u_1$) 2-Propyl-2-ethylpropandiol-1,3, 2,2-Diethylpropandiol-1,3, 2-Butyl-2-ethylpropandiol-1,3 und 2-Phenyl-2-ethylpropandiol-1,3 und als Komponente ($u_2$) 2,3-Dimethyl-butandiol-2,3 sowie 2,5-Dimethylhexandiol-2,5 eingesetzt. Besonders bevorzugt werden als Komponente ($a_1$) 2-Butyl-2-ethyl-propandiol-1,3 sowie 2-Phenyl-2-ethylpropandiol-1,3 und als Komponente ($u_2$) 2,5-Dimethylhexandiol-2,5 eingesetzt.

Die Diole ($u_1$) und/oder ($u_2$) werden üblicherweise in einer Menge von 0,5 bis 15 Gew.-%, bevorzugt 1 bis 7 Gew.-% eingesetzt, jeweils bezogen auf das Gesamtgewicht der zur Herstellung der Polyurethanharze (A3) eingesetzten Aufbaukomponenten.

Als typische multifunktionelle Isocyanate zur Herstellung der Polyurethanharze werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung. Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclobutandiisocyanat Cyclopentylendiisocyanat, Cyclohexylendiisocyanat, Methylcyclohexylendiisocyanat, Dicyclohexylmethandiisocyanat, Ethylendiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Zur Herstellung festkörperreicher Polyurethanharzlösungen werden insbesondere Diisocyanate der allgemeinen Formel (III')

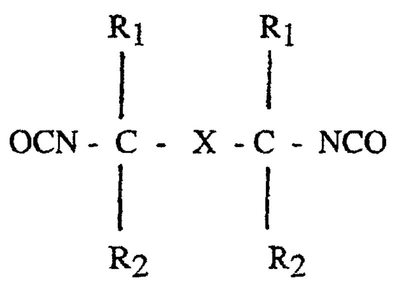

(III')

eingesetzt, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3-oder 1,4-Phenylenrest, besonders bevorzugt für einen 1,3-Phenylenrest und $R_1$ und $R_2$ für einen Alkylrest mit 1 - 4 C-Atomen, bevorzugt für einen Methylrest, stehen. Diisocyanate der Formel (III') sind bekannt (ihre Herstellung wird beispielsweise in der EP-A-101832, US-PS-3,290,350, US-PS-4,130,577 und der US-PS-4,439,616 beschrieben) und zum Teil im Handel erhältlich (1,3-Bis-(2-isocyanatoprop-2-yl)-benzol wird beispielsweise von der American Cynamid Company unter dem Handelsnamen TMXDI (META)® verkauft).

Weiterhin bevorzugt als Polyisocyanatkomponente sind Diisocyanate der Formel (IV'):

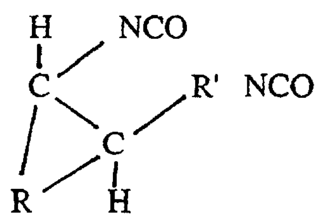

(IV')

mit:

R für einen zweiwertigen Alkyl- oder Aralkylrest mit 3 bis 20 Kohlenstoffatomen und
R' für einen zweiwertigen Alkyl- oder Aralkylrest mit 1 bis 20 Kohlenstoffatomen;

Insbesondere 1-Isocyanato-2-(3-isocyanatopro-1-yl)cyclohexan.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewährleistet. Geeignete Gruppen dieser Art sind nichtionische Gruppen (z. B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die mindestens eine gegenüber Isocyanatgruppen reaktive Gruppe und mindestens eine zur Anionenbildung befähigte Gruppe enthalten. Geeignete gegenüber Isocyanatgruppen reaktive Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Vorzugsweise werden Alkansäuren mit zwei Substituenten am alphha-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen.

Die durch die Carboxylgruppenneutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 12 Gew.-%. Die Menge an Dihydroxyalkansäuren im unneutralisierten Präpolymer ergibt eine Säurezahl von wenigstens 5 mg KOH/g, vorzugsweise wenigstens 10 mg KOH/g. Bei sehr niedrigen Säurezahlen sind im allgemeinen weitere Maßnahmen zur Erzielung der Wasserdispergierbarkeit erforderlich. Die obere Grenze der Säurezahl liegt bei 150 mg KOH/g, vorzugsweise bei 40 mg KOH/g, bezogen auf den Feststoff. Bevorzugt liegt die Säurezahl im Bereich von 20 bis 40 mg KOH/g.

Die Isocyanatgruppen des isocyanatgruppenhaltigen Präpolymers werden mit einem Modifizierungsmittel umgesetzt. Das Modifizierungsmittel wird dabei vorzugsweise in einer solchen Menge zugegeben, daß es zu Kettenverlängerungen und damit zu Molekulargewichtserhöhungen kommt. Als Modifizierungsmittel werden vorzugsweise organische Verbindungen, die Hydroxyl- und/oder sekundäre und/oder primäre Aminogruppen enthalten, insbesondere di-, tri- und/oder höherfünktionelle Polyole, eingesetzt. Als Beispiel für einsetzbare Polyole werden Trimethylolpropan, 1,3,4- Butantriol, Glycerin, Erythrit, Mesoerythrit, Arabit, Adonit usw. genannt. Bevorzugt wird Trimethylolpropan eingesetzt.

Zur Herstellung des erfindungsgemäßen Polyurethanharzes wird bevorzugt zunächst ein Isocyanatgruppen aufweisendes Präpolymer hergestellt, aus dem dann durch weitere Umsetzung, bevorzugt Kettenverlängerung, das gewünschte Polyurethanharz hergestellt wird. Die Umsetzung der Komponenten erfolgt dabei nach den gut bekannten Verfahren der organischen Chemie (vgl. z.B. Kunststoff-Handbuch, Band 7: Polyurethane, herausgegeben von Dr. Y. Oertel, Carl Hanser Verlag, München, Wien 1983). Beispiele für die Herstellung der Präpolymeren sind in der DE-OS 26 24 442 und der DE-OS 32 10 051 beschrieben. Die Herstellung der Polyurethanharze kann nach den bekannten Verfahren erfolgen (z.B. Acetonverfahren).

Die Umsetzung der Komponenten erfolgt bevorzugt in Ethoxyethylpropionat (EEP) als Lösemittel. Die Menge an EEP kann dabei in weiten Grenzen variieren und sollte zur Bildung einer Präpolymerlösung mit geeigneter Viskosität ausreichen. Im allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10 - 15 Gew.-% EEP, bezogen auf den Festkörper, durchgerührt werden.

Die Umsetzung der Komponenten kann gegebenenfalls in Gegenwart eines Katalysators, wie Organozinnverbindungen und/oder tertiären Aminen, erfolgen.

Zur Herstellung der Präpolymeren werden die Mengen der Komponenten so gewählt, daß das Äquivalentverhältnis von NCO- zu OH-Gruppen zwischen 2,0 : 1,0 und > 1,0:1,0, bevorzugt zwischen 1,4 : 1 und 1,1 : 1, liegt.

Das NCO-Präpolymer enthält wenigstens etwa 0,5 Gew.-% Isocyanatgruppen, vorzugsweise wenigstens 1 Gew.-% NCO, bezogen auf den Feststoff. Die obere Grenze liegt bei etwa 15 Gew.-%, vorzugsweise 10 Gew.-%, besonders bevorzugt bei 5 Gew.-% NCO.

Als Komponente (A4) geeignet sind alle mit den übrigen Bestandteilen der Komponente (I) verträglichen, wasserverdünnbaren Bindemittel, beispielsweise acrylierte Polyurethanharze und/oder Polyesteracrylate.

Insbesondere enthält die ganz besonders bevorzugte Komponente (I) als Bindemittel (A)

(A1) mindestens 20 Gew.-% mindestens eines Polyacrylatharzes (A1),

(A2) 0 bis 30 Gew.-% mindestens eines Polyesters (A2),

(A3) 0 bis 80 Gew.-% mindestens eines Polyurethanharzes (A3) und

(A4) 0 bis 10 Gew.-% mindestens eines weiteren Bindemittels (A4),

wobei die Summe der Gewichtsanteile der Komponenten (A1) bis (A4) jeweils 100 Gew.-% beträgt.

Neben den erfindungswesentlichen funktionalisierten Alkanen und den Bindemitteln (A) kann die Komponente (I) als Bestandteil (B) alle lacküblichen Pigmente und/oder Füllstoffe in Anteilen von 0 bis 60 Gew.-%, bezogen auf Komponente (I), enthalten. Dabei können sowohl die in wäßrigen Beschichtungsmitteln üblichen Pigmente, die mit Wasser nicht reagieren bzw. sich in Wasser nicht lösen, als auch die üblicherweise in konventionellen Beschichtungsmitteln angewandtetn Pigmente eingesetzt werden. Die Pigmente können aus anorganischen oder organischen Verbindungen bestehen und können effekt- und/oder farbgebend sein. Das erfindungsgemäße Beschichtungsmittel gewährleistet daher aufgrund dieser Vielzahl geeigneter Pigmente eine universelle Einsatzbreite der Beschichtungsmittel und ermöglicht die Realisierung einer Vielzahl von Farbtönen.

Als Effektpigmente können Metallplättchenpigmente, wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden. Beispiele für geeignete anorganische farbgebende Pigmente sind Titandioxid, Eisenoxide, Sicotransgelb und Ruß. Beispiele für geeignete organische farbgebende Pigmente sind Indanthrenblau, Cromophthalrot, Irgazinorange und Heliogengrün. Beispiele für geeignete Füllstoffe sind Kreide, Calciumsulfate, Bariumsulfat, Silikate wie Talk oder Kaolin, Kieselsäuren, Oxide wie Aluminiumhydroxid oder Magnesiumhydroxid, Nanopartikel oder organische Füllstoffe wie Textilfasern, Cellulosefasern, Polyethylenfasern oder Holzmehl.

Als weiteren Bestandteil (C) kann die Komponente (I) mindestens ein organisches, gegebenenfalls wasserverdünnbares Lösemittel enthalten. Solche Lösemittel können auch an der Reaktion mit der vernetzenden Komponente (II) teilnehmen und somit als Reaktivverdünner wirken.

Beispiele für geeignete Lösemittel sind die schon bei der Herstellung der Polyacrylatharze (A1) genannten Verbindungen (siehe oben). Weiterhin geeignet sind Ester, Ketone, Ketoester, Glykolether wie Ethylen-, Propylen- oder Butylenglykolether, Glykolester wie Ethylen-, Propylen- oder Butylenglykolester oder Glykoletherester wie Ethoxyethylpropionat und Isopropoxypropanol.

Außerdem kommen aliphatische und aromatische Lösemittel wie Dipenten, Xylol oder Shellsol$^R$ in Betracht

Die Lösemittel (C) können weiterhin teilweise oder vollständig aus niedermolekularen oligomeren Verbindungen bestehen, die gegenüber der vernetzenden Komponente (II) reaktiv oder auch nicht reaktiv sein können. Sofern sie reaktiv sind, handelt es sich um Reaktiverdünner.

Beispiele geeigneter Reaktiverdünner werden vorstehend beschrieben.

Als Bestandteil (D) enthält die Komponente (I) gegebenenfalls mindestens ein Neutralisationsmittel.

Beispiele geeigneter Neutralisationsmittel für in Kationen umwandelbare funktionelle Gruppen (i) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen (ii) sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Die Neutralisation kann in organischer Phase oder in wäßriger Phase erfolgen. Bevorzugt wird als Neutralisationsmittel Dimethylethanolamin eingesetzt.

Die insgesamt in dem erfindungsgemäßen Beschichtungsmittel eingesetzte Menge an Neutralisationsmittel (D) wird so gewählt, daß 1 bis 100 Äquivalente, bevorzugt 50 bis 90 Äquivalente der funktionellen Gruppen (i) oder (ii) des Bindemittels (A) neutralisiert werden. Das Neutralisationsmittel (D) kann dabei der Komponente (I), (II) und/oder (III) zugesetzt werden. Bevorzugt wird das Neutralisationsmittel (D) aber der Komponente (III) zugesetzt.

Als Bestandteil (E) kann die Komponente (I) mindestens ein rheologiesteuerndes Additiv enthalten. Beispiele geeigneter rheologiesteuernder Additive sind die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth) acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate. Bevorzugt werden als rheologiesteuernde Additive Polyurethane eingesetzt.

Die Komponente (I) kann außerdem mindestens noch ein weiteres übliches Lackadditiv (E) enthalten. Beispiele für derartige Additive sind Entschäumer, Dispergierhilfsmittel, Emulgatoren, und Verlaufmittel.

Selbstverständlich können die genannten Additive (E) auch separat dem Beschichtungsmittel zugesetzt werden. In diesem Fall werden die Additive (E) dann als Komponente (IV) bezeichnet.

Bevorzugt werden zur Herstellung der erfindungsgemäßen Beschichtungsmittel Komponenten (I) eingesetzt, die aus

- 20 bis 90 Gew.-%, bevorzugt 35 bis 80 Gew.-%, des Bindemittels (A), insbesondere die polymeren oder oligomeren Harze (A1), (A2), (A3) und/oder (A4),

- 1 bis 80 Gew.-%, bevorzugt 5 bis 50 Gew.-%, bezogen auf die Gesamtmenge von Bindemittel (A) und funktionalisiertem Alkan, mindestens eines funktionalisierten Alkans,

- 0 bis 60 Gew.-% mindestens eines Pigments und/oder Füllstoffs (B),

- 0 bis 50 Gew.-%, bevorzugt 10 bis 40 Gew.-%, mindestens eines organischen, gegebenenfalls wasserverdünnbaren Lösemittels (C),

- 0 bis 20 Gew.-%, bevorzugt 0,1 bis 10 Gew.-%. mindestens eines Neutralisationsmittels (D) und

- 0 bis 20 Gew.-%, bevorzugt 2 bis 10 Gew.-%, mindestens eines üblichen Hilfs- und/oder Zusatzstoffes (E) (Lackadditiv)

bestehen, wobei die Summe der Gewichtsanteile aller Bestandteile jeweils 100 Gew.-% beträgt.

Der weitere wesentliche Bestandteil des erfindungsgemäßen Beschichtungsmittels ist mindestens ein Vernetzungsmittel (F), welches in der Komponente (II) enthalten ist.

Bei den Vernetzungsmitteln (F) handelt es sich um mindestens ein gegebenfalls in einem oder mehreren organischen, gegebenenfalls wasserverdünnbaren Lösemitteln gelöstes oder dispergiertes Di- und/oder Polyisocyanat (F).

Bei der Polyisocyanatkomponente (F) handelt es sich um organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und - sofern das manuelle Vermischen der Komponenten (I), (II) und (III) vorgesehen ist - insbesondere 1000 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind die bei der Beschreibung der Polyurethanharze (A3) genannten Isocyanate und/oder isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter Polyisocyanate sind isocyanatgruppenhaltige Polyurethanpräpolymere, die durch Reaktion von Polyolen mit einem Überschuß an Polyisocyanaten hergestellt werden können und bevorzugt niederviskos sind. Es können auch Isocyanurat-, Biuret-, Allophanat-, Iminooxadiazindon-, Urethan-, Harnstoff- und/oder Uretdiongruppen aufweisende Polyisocyanate verwendet werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethylheptan oder 1-Isocyanato-2-(3-isocyanatopropyl)cyclohexan. 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan. oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Das erfindungsgemäße Beschichtungsmitttel kann desweiteren isocyanatgruppenfreie Vernetzungsmittel (F') enthalten. Diese können je nach ihrer Reaktivität in den Komponenten (I), (II) und/oder (III) enthalten sein; wesentlich ist, daß die Vernetzungsmittel (F') die Lagerstabilität der betreffenden Komponente, etwa durch vorzeitige Vernetzung, nicht nachteilig beeinflussen.

Der Fachmann kann deshalb die geeigneten Kombinationen von Vernetzungsmittel (F') einerseits und Komponenten (I), (II) und/oder (III) andererseits in einfacher Weise auswählen.

Beispiele geeigneter Vernetzungsmittel (F') sind blockierte Di- und/oder Polyisocyanate auf der Basis der vorstehend genannten Di- und/oder Polyisocyanate (F). Beispiele für geeignete Blockierungsmittel sind aliphatische, cycloaliphatische oder araliphatische Monoalkohole wie Methyl-, Butyl-, Octyl-, Laurylalkohol, Cyclohexanol oder Phenylcarbinol; Hydroxylamine wie Ethanolamin; Oxime wie Methylethylketonoxim, Acetonoxim oder Cyclohexanonoxim; Amine wie Dibutylamin oder Diisopropylamin; CH-acide verbindungen wie Malonsäurediester oder Acetessigsäureethylester; Heterocyclen wie Dimethylpyrazol; und/oder Lactame wie epsilon-Caprolactam. Diese Vernetzungsmittel

(F') können in den Komponenten (I), (II) und/oder (III) enthalten sein.

Weitere Beispiele für geeignete Vernetzungsmittel (F') sind Polyepoxide (F'), insbesondere alle bekannten aliphatischen und/oder cycloaliphatischen und/oder aromatischen Polyepoxide, beispielsweise auf Basis Bisphenol-A oder Bisphenol-F. Als Polyepoxide (F') geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether). Diese Vemetzungsmittel (F') können in den Komponenten (I) und/oder (III) enthalten sein.

Als Vernetzungsmittel (F') können auch Tris(alkoxycarbonylamino)triazine der Formel

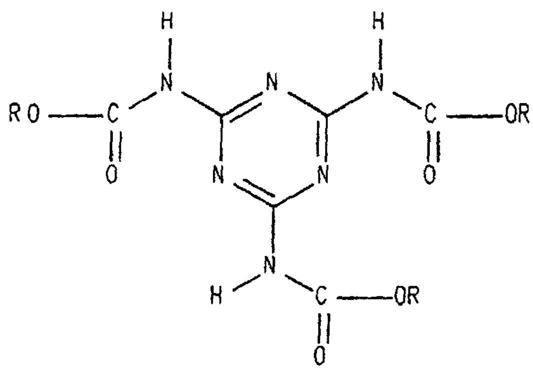

eingesetzt werden. Diese Vernetzungsmittel (F') können in den Komponenten (I) und/oder (III) enthalten sein.

Beispiele geeigneter Tris(alkoxycarbonylamino)triazine (F') werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel (F') verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP -B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. Diese Vernetzungsmittel (F') können in den Komponenten (I) und/oder (II) enthalten sein.

Weitere Beispiele geeigneter Vernetzungsmittel (F') sind beta-Hydroxyalkylamide wie N,N,N',N'-Tetrakis (2-hydroxyethyl)adipamid oder N,N,N',N'-Tetrakis(2-hydroxypropyl)-adipamid. Diese Vernetzungsmittel (F') können in den Komponenten (I) und/oder (III) enthalten sein.

Weitere Beispiele geeigneter Vernetzungsmittel (F') sind Siloxane, insbesondere Siloxane mit mindestens einer Trialkoxy- oder Dialkoxysilangruppe. Diese Vemetzungsmittel (F') können in den Komponenten (I), (II) und/oder (III) enthalten sein.

Die Polyisocyanate (F) werden vorteilhafterweise in einer Menge von mindestens 70 Gew.-%, besonders bevorzugt in einer Menge von 80 bis 100 Gew.-%, bezogen auf das Gesamtgewicht der Vernetzungsmittel (F) und (F') in dem erfindungsgemäßen Beschichtungsmittel, eingesetzt.

Die Bestandteile (G) und (H) der Komponente (II) entsprechen den Bestandteilen (C) und (E) der Komponente (I) ), nur daß hier Bestandteile verwendet werden, welche nicht mit Isocyanatgruppen reagieren.

Bevorzugt werden zur Herstellung der erfindungsgemäßen Beschichtungsmittel Komponenten (II) eingesetzt, die aus

(F) 50 bis 100 Gew.-%, bevorzugt 60 bis 90 Gew.-%, mindestens eines Vernetzungsmittels,

(G) 0 bis 50 Gew.-%, bevorzugt 10 bis 40 Gew.-%, mindestens eines organischen, gegebenenfalls wasserverdünnbaren Lösemittels und

(H) 0 bis 20 Gew.-%, bevorzugt 0 bis 10 Gew.-% mindestens eines üblichen Hilfs- und/oder Zusatzstoffes,

bestehen, wobei die Summe der Gewichtsanteile der Komponenten (F) bis (H) jeweils 100 Gew.-% beträgt.

Der weitere wesentliche Bestandteile des erfindungsgemäßen Beschichtungsmittels ist Komponente (III).

Erfindungsgemäß enthält diese Komponente (III) Wasser oder besteht hieraus. Erfindungsgemäß ist es von Vorteil, wenn die Komponente (III) außer Wasser noch weitere geeignete Bestandteile enthält.

Beispiele geeigneter Bestandteile sind die vorstehend im Detail beschriebenen Bindemittel (A), insbesondere die Bindemittel (A), welche

(i) funktionelle Gruppen, die durch Neutralisationsmittel und/oder Quaternisierungsmittel in Kationen überführt werden können, und/oder kationische Gruppen
oder

(ii) funktionelle Gruppen, die durch Neutralisationsmittel in Anionen überführt werden können, und/oder anionische Gruppen
und/oder

(iii) nichtionische hydrophile Gruppen

enthalten. Von diesen sind die in Wasser gelösten oder dispergierten Bindemittel (A1), (A2) und/oder (A3) und gegebenenfalls (A4) besonders vorteilhaft und werden deshalb besonders bevorzugt verwendet.

Sofern die Komponente (I) Bindemittel (A) enthält, welche nicht oder nur in geringem Umfang in Wasser löslich oder dispergierbar sind, empfiehlt es sich, vor allem die in Wasser gelösten oder dispergierten Bindemittel (A1), (A2) und/oder (A3) zu verwenden.

Die Bindemittel (A) können indes auch in der Form einer Pulverslurry vorliegen. Hierbei können die weiteren Flammschutzmittel (F) in den Pulverslurry-Partikeln enthalten sein. Pulverslurries sind üblich und bekannt und werden beispielsweise in den Patentschriften EP-A-0 652 264, US-A-4,268,542, DE-A-196 13 547 oder die DE-A-195 18 392 beschrieben.

Darüber hinaus kann die Komponente (III) noch mindestens einen der vorstehend beschriebenen Reaktivverdünner enthalten.

Ganz besonders bevorzugt werden zur Herstellung der erfindungsgemäßen Beschichtungsmittel Komponenten (III) eingesetzt, die aus

(J) 40 bis 90 Gew.-%, bevorzugt 50 bis 85 Gew.-% Wasser,

(K) 5 bis 50 Gew.-%, bevorzugt 10 bis 45 Gew.-% des Bindemittels (A), insbesondere die polymeren oder oligomeren Harze (A1), (A2) und/oder (A3) und gegebenenfalls (A4), in in Wasser dispergierter oder gelöster Form,

(L) 0 bis 20 Gew.-%, bevorzugt 2 bis 10 Gew.-%, mindestens eines Neutralisationsmittels und

(M) 0 bis 20 Gew.-%, bevorzugt 2 bis 10 Gew.-%, mindestens eines üblichen Hilfs- und/oder Zusatzstoffes (Lackadditiv),

bestehen, wobei die Summe der Gewichtsanteile der Komponenten (J) bis (M) jeweils 100 Gew.-% beträgt.

Die Bestandteile (L) und (M) der Komponente (III) entsprechen den Bestandteilen (D) und (E) der Komponente (I).

Die aus der in Wasser dispergierten Form der Komponente (A) und damit der in Wasser-dispergierten Form der Bindemittel (A1), (A2) und/oder (A3) und gegebenenfalls (A4) bestehende Komponente (III) kann einerseits durch Herstellung der Komponenten in organischen Lösemittel, anschließende Neutralisierung der Säuregruppen, insbesondere Carboxylgruppen, mit dem Neutralisierungsmittel (L) und abschließend Einbringen der neutralisierten Bestandteile in deionisiertes Wasser, andererseits durch Emulsionspolymerisation der monomeren Bausteine der Bindemittel (A) in Wasser hergestellt werden.

Vorzugsweise werden die Komponenten (A1), (A2) und/oder (A3) und gegebenenfalls (A4) zunächst in organischen Lösemitteln hergestellt, anschließend neutralisiert und abschließend in neutralisierter Form in Wasser dispergiert.

Bei der Herstellung der in Wasser dispergierten Form der Polyacrylatharze (A1) wird die Polymerisation im organischen Lösemittel vorzugsweise mehrstufig mit seperaten Monomeren- und Initiatorzuläufen durchgerührt. Ganz besonders bevorzugt wird das Polyacrylatharz (A1) nach dem schon zuvor beschriebenen Zweistufenverfahren hergestellt, indem

1. ein Gemisch aus (al), (a2), (a4), (a5) und (a6) oder ein Gemisch aus Teilen der Komponenten (a1), (a2), (a4), (a5) und (a6) in einem organischen Lösemittel polymerisiert wird,

2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und

3. nach Beendigung der Polymerisation das erhaltene Polyacrylatharz (A1) gegebenenfalls zumindest teilweise neutralisiert wird.

Beispiele für geeignete Neutralisationsmittel (L), wie sie in Schritt 3. eingesetzt werden, sind die schon bei der Herstellung der Komponente (I) beschriebenen Ammoniak, Ammoniumsalze und Amine (Bestandteil (D) der Komponente (I)), wobei die Neutralisation in organischer oder in wäßriger Phase erfolgen kann. Die insgesamt zur Neutralisierung der Komponente (A1) eingesetzte Menge an Neutralisationsmittel (L) wird so gewählt, daß 1 bis 100 Äquivalente, bevorzugt 50 bis 90 Äquivalente der Säuregruppen des Bindemittels (A1) neutralisiert werden.

Als Bestandteile (A2) in Komponente (III) bevorzugt eingesetzt werden Polyester (A2), die nach einem zweistufigen Verfahren hergestellt worden sind, indem zunächst ein hydroxylgruppenhaltiger Polyester mit einer OH-Zahl von 100 bis 300 mg KOH/g, einer Säurezahl von weniger als 10 mg KOH/g und einem zahlenmittleren Molekulargewicht Mn von 500 bis 2000 Dalton hergestellt wird, der dann in einer zweiten Stufe mit Carbonsäureanhydriden zu dem gewünschten Polyester (A2) umgesetzt wird. Die Menge an Carbonsäureanhydriden wird dabei so gewählt, daß der erhaltene Polyester die gewünschte Säurezahl aufweist.

Nach Beendigung der Umsetzung wird der Polyester (A2) zumindestens teilweise neutralisiert, wobei wiederum die schon bei der Herstellung der Komponente (I) beschriebenen Neutralisationsmittel (L) (Bestandteil (D) der Komponente (I)) zum Einsatz kommen und wobei die Neutralisation in organischer oder in wäßriger Phase erfolgen kann.

Zur Herstellung der Polyurethanharze (A3) für die Komponente (III) wird vorzugsweise zunächst ein Isocyanatgruppen aufweisendes Präpolymer hergestellt, aus dem dann durch weitere Umsetzung, bevorzugt durch Kettenverlängerung, das Polyurethanharz (A3) hergestellt wird.

Nach Beendigung der Polymerisation wird das erhaltene Poylurethanharz zumindest teilweise neutralisiert, wobei als geeignete Neutralisationsmittel (L) wiederum beispielhaft die schon bei der Herstellung der Komponente (I) beschriebenen Ammoniak, Ammoniumsalze und Amine (Komponente (D) der Komponente (I)) zum Einsatz kommen können und wobei die Neutralisation in organischer oder in wäßriger Phase erfolgen kann.

Als gegebenenfalls zusätzlich anwesende Komponente (A4) geeignet sind alle mit den übrigen Bestandteilen der Komponente (III) verträglichen, wasserverdünnbaren und/oder wasserdispergierbaren Bindemittel, beispielsweise acrylierte Polyurethanharze und/oder Polyesteracrylate.

Die Komponenten (I), (II) und (III) werden zur Herstellung der Beschichtungsmittel bevorzugt in solchen Mengen eingesetzt, daß das Äquivalentverhältnis von Hydroxylgruppen der Bindemittel (A) sowie der erfindungsgemäß zu verwendenden funktionalisierten Alkane und gegebenenfalls der Reaktivverdünner zu den vernetzenden Gruppen des Vernetzungsmittels (F) sowie gegebenenfalls (F') zwischen 1 : 2 und 2 : 1, bevorzugt zwischen 1 : 1,2 und 1 : 1,5, liegt.

Die erfindungsgemäßen Beschichtungsmittel weisen außerdem bevorzugt einen Gesamtgehalt an

- erfindungswesentlichen funktionalisierten Alkanen von 10 bis 60 Gew.-%, bevorzugt 15 bis 50 Gew.-%,
- Bindemitteln (A) von 15 bis 60 Gew.-%, bevorzugt von 20 bis 50 Gew.-%,
- Vernetzungsmitteln (F) von 5 bis 30 Gew.-%, bevorzugt von 10 bis 20 Gew.-%,
- organischen Lösemitteln ( C) von 5 bis 25 Gew.-%, bevorzugt von 10 bis 20 Gew.-%,
- Wasser von 25 bis 60 Gew.-%, bevorzugt von 30 bis 50 Gew.-%,
- Pigmenten und/oder Füllstoffen (B) von 0 bis 50 Gew.-%, bevorzugt von 0 bis 30 Gew.-%, sowie
- üblichen Lackadditiven (E) von 0 bis 10 Gew.-%,

jeweils bezogen auf das Gesamtgewicht des erfindungsgemäßen Beschichtungsmittels auf.

Die Herstellung der Komponente (I) erfolgt nach dem Fachmann bekannten Methoden durch Mischen und gegebenenfalls Dispergieren der einzelnen Bestandteile. So erfolgt beispielsweise die Einarbeitung von farbgebenden Pigmenten (B) üblicherweise durch Anreiben (Dispergieren) der jeweiligen Pigmente in einem oder mehreren Bindemitteln. Das Anreiben der Pigmente erfolgt mit Hilfe üblicher Vorrichtungen, wie beispielsweise Perlmühlen und Sandmühlen.

Die Herstellung der Komponenten (II), (III) und gegebenenfalls (IV) erfolgt ebenfalls nach dem Fachmann gut bekannten Methoden durch Mischen bzw. Dispergieren der einzelnen Bestandteile.

Die erfindungsgemäßen Beschichtungsmittel werden insbesondere durch folgendes Mischverfahren aus den Komponenten (I), (II), (III) und gegebenenfalls (IV) hergestellt:

Zur Herstellung der erfindungsgemäßen Beschichtungsmittel werden zunächst die Komponenten (I) und (II) gemischt, wobei bevorzugt diese Komponenten (I) und (II) kein Neutralisationsmittel enthalten. Dann wird zu dieser Mischung gegebenenfalls die Komponente (IV) zugesetzt. Entweder wird dann die so erhaltene Mischung in die Neutralisationsmittel (L) enthaltende Komponente (III) gegeben und das erhaltene Beschichtungsmittel dispergiert, oder es wird dann in die so erhaltene Mischung die Neutralisationsmittel (L) enthaltende Komponente (III) gegeben.

Ferner kann das erfindungsgemäße Beschichtungsmittel analog zu dem gerade beschriebenen Verfahren hergestellt werden, wobei allerdings das Neutralisationsmittel (L) nicht in der Komponente (III) enthalten ist, sondern vor der Zugabe der Komponente (III) separat zugegeben wird.

Außerdem kann das erfindungsgemäße Beschichtungsmittel auch dadurch hergestellt werden, daß die Komponente (I) zunächst mit dem Neutralisationsmittel (L) versetzt wird. Selbstverständlich kann anstelle dieser Mischung auch eine Komponente (I) eingesetzt werden, die bereits das Neutralisationsmittel (L) enthält. Die so erhaltene Komponente(I) wird dann mit der Komponente (II) und gegebenenfalls der Komponente (IV) gemischt (gleichzeitig oder aufeinanderfolgende Mischung mit (II) und gegebenenfalls (IV)), die so erhaltene Mischung wird dann entweder zu der Komponente (III) gegeben oder mit der Komponente (III) versetzt, und das so jeweils erhaltene Beschichtungsmittel wird noch durch Dispergieren homogenisiert.

Wenn ausschließlich nichtionische hydrophile Gruppen (iii) enthaltende Bindemittel (A) verwendet werden, entfällt die Anwendung der Neutralisationsmittel (L).

Die erfindungsgemäßen Beschichtungsmittel können durch übliche Applikationsmethoden, wie z.B. Spritzen, Rakeln, Streichen, Gießen, Tauchen oder Walzen auf beliebige Substrate, wie z.B. Metall, Holz, Kunststoff, Glas oder Papier, aufgebracht werden.

Bei ihrer Verwendung in der Autoreparaturlackierung werden die erfindungsgemäßen Beschichtungsmittel üblicherweise bei Temperaturen von unter 120°C, bevorzugt bei Temperaturen von maximal 80°C, gehärtet. Bei ihrer Verwendung in der Autoserienlackierung werden auch höhere Härtungstemperaturen angewendet werden.

Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden vorzugsweise aber im Bereich der Reparaturlackierung und der Lackierung von Kunststoffteilen eingesetzt.

Die erfindungsgemäßen wäßrigen Beschichtungsmittel können als Füller sowie zur Herstellung einschichtiger Decklackierungen sowie als pigmentierte Basislacke oder als Klarlacke in einem Verfahren zur Herstellung einer mehrschichtigen Lackierung eingesetzt werden (Base Coat-Clear Coat-Verfahren).

## Beispiele und Vergleichsversuch V1

### Herstellbeispiel 1

### Die Herstellung eines Polyacrylatharzes (A1-1)

In einem für die Polymerisation geeigneten 100 Kilogramm-Stahlreaktor, ausgestattet mit Monomerzulauf, Initiatorzulauf, Temperaturmessvorrichtungen, Ölheizung und Rückflußkühler wurden 25 kg Ethoxyethylpropionat (EEP) eingewogen und auf 130°C erhitzt. Hierzu dosierte man unter Rühren innerhalb von vier Stunden gleichmäßig eine Mischung aus 7,13 kg Butylmethacrylat, 5,72 kg Methylmethacrylat, 5,96 kg Styrol, 3,16 kg Laurylmethacrylat und 6,76 kg Hydroxyethylacrylat. Fünf Minuten vor diesem Zulauf wurde der Initiatorzulauf gestartet. Die Initiatorlösung (2,74 kg tert.-Butylperoxiethylhexanoat in 4,48 kg EEP) wurde während 4,5 Stunden gleichmäßig zudosiert. Nach 2,5 Stunden der Dosierzeit des ersten Monomerzulaufs wurde der zweite Monomerzulauf gestartet. Er bestand aus 2,8 kg Hydroxyethylacrylat, 1,36 kg Acrylsäure und 0,68 kg EEP und wurde während 1,5 Stunden gleichmäßig zudosiert.

Es resultierte das Polyacrylatharz (A1-1) mit einem Festkörpergehalt von 79,2 % (eine Stunde, 130°C), einer Säurezahl von 31,1 mg KOH/g und einer Viskosität von 4,4 dPas (55 %ig in EEP).

**Herstellbeispiel 2**

**Die Herstellung einer Polyesterharz-Vorstufe**

In einem für Polykondensationreaktionen geeigneten 4 Liter-Stahlreaktor wurden 1088 g Hydroxypivalinsäureneopentylglykolester, 120 g Phthalsäureanhydrid, 1268 g Isophthalsäure, 21 g Butylethylpropandiol, 489 g Neopentylglykol und 113 g Xylol vorgelegt. Anschließend wurde aufgeheizt, und das Kondensationswasser wurde kontinuierlich entfernt, bis eine Säurezahl von 3,5 mg KOH/g erreicht war. Anschließend wurde mit EEP ein Festkörpergehalt von 79,7% eingestellt. Die Säurezahl des resultierenden Polyesterharzes (A2) betrug 4,4 mg KOH/g, die Viskosität 3,6 dPas (60 %ig in EEP).

**Herstellbeispiel 3**

**Die Herstellung eines erfindungsgemäß zu verwendenden, in Wasser dispergierten Polyurethanharzes (A3)**

In einem für die Polyurethanharzsynthese geeigneten 4 Liter-Stahlreaktor wurden 749 g der Polyesterharz-Vorstufe des Herstellbeispiels 2, 6,6 g Ethylbutylpropandiol, 69 g Dimethylolpropionsäure und 318 g m-Tetramethylxylylendiisocyanat vorgelegt und bei 110°C Produkttemperatur reagieren lassen, bis ein konstanter Isocyanatgehalt erreicht war. Danach wurden 101 g Trimethylolpropan in einer Portion zugesetzt, und es wurde bis zur Beendigung der Reaktion weiter erhitzt. Anschließend wurden 31,5 g EEP hinzugegeben. Nach 30minütigem Rühren wurde mit 36,7 g Dimethylethanolamin neutralisiert. Das resultierende Polyurethanharz (A3) wurde bei 90 bis 110°C in 1929,2 g 60°C warmem Wassers dispergiert. Die resultierende Dispersion war frei von Gelteilchen, homogen und wies einen Festkörpergehalt von 36,1%, eine Säurezahlen von 30,3 mg KOH/g und einen pH-Wert von 7,1 auf. Die Dispersionen war länger als vier Wochen bei 40°C lagerstabil.

**Herstellbeispiel 4**

**Die Herstellung eines erfindungsgemäß zu verwendenden, in Wasser dispergierten Polyacrylatharzes (A1-2)**

Die Herstellung des Polyacrylatharzes erfolgte in einem 4 Liter-Stahlreaktor mit Rührer, Rückflußkühler, 2 Monomerzuläufen und einem Initiatorzulauf. Es wurden 385 g n-Butanol vorgelegt und auf 110°C erhitzt. Innerhalb von fünf Stunden wurden eine Mischung von 255 g Butylmethacrylat, 197 g Methylmethacrylat, 181 g Styrol, 113 g Methacrylester 13 (Methacrylsäurealkylester der Firma Rohm & Haas) und 215 g Hydroxyethylacrylat zudosiert. Nach 3,5 Stunden des ersten Monomerzulaufs wurde ein zweiter Monomerzulauf aus 113 g Hydroxyethylmethacrylat und 58 g Acrylsäure gestartet und während 1,5 Stunden gleichmäßig zudosiert. Anschließend wurde während zwei Stunden nachpolymerisiert. Nach der Neutralisation mit 63 g Dimethylethanolamin wurde noch während 30 Minuten nachgerührt. Das resultierende neutralisierte Polyacrylatharz (A1-2) wurde in 1338 g deionisiertem Wasser dispergiert. Das organische Lösemittel wurde im Vakuum bis auf einen Restgehalt <1,5% abdestilliert. Nach der Einstellung des Festkörpergehalts mit deionisiertem Wasser auf 39,9% wurde die resultierende Dispersion charakterisiert. Ihr pH-Wert betrug 7,2, die Säurezahl 41,4 mg KOH/g. Sie zeigte ein strukturviskoses Verhalten und war länger als vier Wochen bei 40 °C lagerstabil.

**Beispiel 1**

**Herstellung eines erfindungsgemäßen Beschichtungsmittels**

**1.1 Die Herstellung der Komponente (I)**

Zur Herstellung der Komponente (I) wurden die folgenden Bestandteile durch Mischen mittels eines Rührers (600 U/min) miteinander vermischt:

70,48 Gewichtsteile des Polyacrylatharzes (A1-1) des Herstellbeispiels 1,

11,36 Gewichtsteile 2,4-Diethyloctandiol-1,5,

4,24 Gewichtsteile Dibasic Ester (DBE; Gemisch aus Dimethyladipat, -glutarat und -succinat der Firma DuPont)

12,76 Gewichtsteile Butylglykolacetat,

4,24 Gewichtsteile eines handelsüblichen Benetzungsmittels (Tensid S der Firma Biesterfeld),

0,88 Gewichtsteile eines Verlaufinittels auf Basis eines polyethermodifizierten Dimethylsiloxancopolymerisats (Byk$^R$ 333 der Firma Byk Gulden),

0,88 Gewichtsteile eines handelsüblichen Silikonaddidvs (Tego Glide$^R$ 410 der Firma Tego Chemie),

2,52 Gewichtsteile eines fluorhaltigen Verlaufmittels (Fluorad$^R$ FL 430, 10 %ig in Butylglykolacetat, der Firma 3 M),

1,76 Gewichtsteile eines handelsüblichen Lichtschutzmittels (Tinuvin$^R$ 292 der Firma Ciba) und

1,28 Gewichtsteile eines weiteren handelsüblichen Lichtschutzmittels (Tinuvin$^R$ 1130 der Firma Ciba).

### 1.2 Die Herstellung der Komponente (II)

Zur Herstellung der Komponente (II) wurden 74,6 Gewichtsteile DesmodurR 2025/1 (Polyisocyanat vom Hexamethylendiisocyanat-Typ mit einem Isocyanatgehalt von 23% der Firma Bayer) und 6,44 Gewichtsteile Butylglykolacetat miteinander vermischt.

### 1.3 Die Herstellung der Komponente (III)

Zur Herstellung der Komponente (III) wurden 72,48 Gewichtsteile deionisiertes Wasser, 1,76 Gewichtsteile Dimethylethanolamin, 44,8 Gewichtsteile der Polyacrylatharzdispersion (A1-2) des Herstellbeispiels 4 und 89,52 Gewichtsteile der Polyurethanharzdispersion (A3) des Herstellbeispiels 3 miteinander vermischt.

### 1.4 Die Herstellung eines erfindungsgemäßen Klarlacks

Zur Herstellung des erfindungsgemäßen Klarlacks wurden die vorstehend beschriebenen Komponenten (I), (II) und (III) unter Rühren miteinander vermischt. Der resultierende Klarlack wies eine Viskosität von 73 s (DIN 4-Becher) auf; zur Applikation wurde sie durch Zugabe von 15,4 Gewichtsteilen Wasser auf 35 s eingestellt.

### 1.5 Die Herstellung erfindungsgemäßer Beschichtungen und Prüftafeln

Stahltafeln, welche in üblicher und bekannter Weise mit einem Elektrotauchlack und einem Füller beschichtet waren, wurden mit einem schwarzen Basislack in einer Stärke von 12 bis 15 Mikrometer beschichtet. Der Basislack wurde während zehn Minuten bei 80°C vorgetrocknet. Hiernach wurde der erfindungsgemäße Klarlack in verschiedenen Schichtdicken aufgetragen.

Bei Beispiel 1.5a wurden die Stahltafeln während 15 Minuten bei Raumtemperatur und während 10 Minuten bei 80 °C getrocknet und anschließend bei 140°C eingebrannt.

Bei Beispiel 1.5b wurden die Stahltafeln während 15 Minuten bei Raumtemperatur und während 45 Minuten bei 80°C getrocknet.

In beiden Fällen lag die Kochergrenze bei ca. 60 Mikrometer; es traten nur wenige feine Nadelstiche auf.

Der Glanz wurde bei 20° nach DIN 67530 bei Beispiel 1.5a zu 84,1, bei Beispiel 1.5b zu gehen 80,5 bestimmt.

Die Grauschleier wurden mit dem Haze-Meßgerät Microglass Haze der Firma Byk-Gardner gemessen; bei beiden Beispielen lag der Wert unter 20.

Die Benzinfestigkeit wurde wie folgt getestet: die lackierten Prüftafeln wurden während 24 Stunden bei 23°C an der Luft getrocknet. Hiernach wurden Filterpads mit einem Durchmesser von 2,3 cm auf die Prüftafeln gelegt. Mit einer Pipette wurden 0,75 ml Superbenzin (nicht älter als vier Wochen) auf die Filterpads geträufelt, wonach sofort mit 100 g schweren Gewichten belastet wurden. Nach fünf Minuten wurden die Gewichte und die Filterpads wieder entfernt. Das überschüssige Superbenzin wurde entfernt, und die Einwirkstellen wurden sofort auf Markierungen untersucht. Bei beiden Beispielen 1.5a und 1.5b waren keine Markierungen zu sehen.

### Vergleichsversuch V1

### Herstellung eines nicht erfindungsgemäßen Beschichtungsmittels

Für die Herstellung des nicht erfindungsgemäßen Beschichtungsmittels wurden die Komponenten (I), (II) und (III) in ihrer Zusammensetzung und ihrem Verhältnis zueinander so gewählt, daß das resultierende, noch nicht auf

Spritzviskosität eingestellte Beschichtungsmittel ein Festkörper/Lösemittel-Verhältnis von 79 : 21 aufwies, was dem des Beispiels 1 entsprach. Außerdem wurden bei dem Vergleichsversuch V1 und bei Beispiel 1 vergleichbare Verhältnisse von Additiv- zu Bindemittel-Mengen eingestellt.

**V1.1 Die Herstellung der Komponente (I)**

Zur Herstellung der Komponente (I) wurden die folgenden Bestandteilen durch Mischen mittels eines Rührers (600 U/min) miteinander vermischt:

59,4 Gewichtsteile des Polyacrylatharzes (A1-1) des Herstellbeispiels 1,

3,57 Gewichtsteile Dibasic Ester (DBE; Gemisch aus Dimethyladipat, -glutarat und -succinat der Firma DuPont)

5,13 Gewichtsteile Butylglykolacetat,

3,57 Gewichtsteile eines handelsüblichen Benetzungsmittels (Tensid S der Firma Biesterfeld),

0,72 Gewichtsteile eines Verlaufmittels auf Basis eines polyethermodifizierten Dimethylsiloxancopolymerisats (Byk$^R$ 333 der Firma Byk Gulden),

0,72 Gewichtsteile eines handelsüblichen Silikonadditivs (Tego Glide$^R$ 410 der Firma Tego Chemie),

2,16 Gewichtsteile eines fluorhaltigen Verlaufmittels (Fluorad$^R$ FL 430, 10 %ig in Butylglykolacetat, der Firma 3 M),

1,44 Gewichtsteile eines handelsüblichen Lichtschutzmittels (Tinuvin$^R$ 292 der Firma Ciba) und

1,08 Gewichtsteile eines weiteren handelsüblichen Lichtschutzmittels (Tinuvin$^R$ 1130 der Firma Ciba).

**V1.2 Die Herstellung der Komponente (II)**

Zur Herstellung der Komponente (II) wurden 43,35 Gewichtsteile DesmodurR 2025/1 (Polyisocyanat vom Hexamethylendiisocyanat-Typ mit einem Isocyanatgehalt von 23% der Firma Bayer) und 3,12 Gewichtsteile Butylglykolacetat miteinander vermischt.

**V1.3 Die Herstellung der Komponente (III)**

Zur Herstellung der Komponente (III) wurden 61.05 Gewichtsteile deionisiertes Wasser, 1,44 Gewichtsteile Dimethylethanolamin, 37,8 Gewichtsteile der Polyacrylatharzdispersion (A1-2) des Herstellbeispiels 4 und 75,45 Gewichtsteile der Polyurethanharzdispersion (A3) des Herstellbeispiels 3 miteinander vermischt.

**V1.4 Die Herstellung eines nicht erfindungsgemäßen Klarlacks**

Zur Herstellung des nicht erfindungsgemäßen Klarlacks wurden die vorstehend beschriebenen Komponenten (I), (II) und (III) durch Rühren miteinander vermischt. Der resultierende Klarlack wies eine Viskosität von 53 s (DIN 4-Becher) auf; zur Applikation wurde sie durch Zugabe von 6,2 Gewichtsteilen Wasser auf 35 s eingestellt.

**V1.5 Die Herstellung nicht erfindungsgemäßer Beschichtungen und Prüftafeln**

Stahltafeln, welche in üblicher und bekannter Weise mit einem Elektrotauchlack und einem Füller beschichtet waren, wurden mit einem schwarzen Basislack in einer Stärke von 12 bis 15 Mikrometer beschichtet. Der Basislack wurde während zehn Minuten bei 80°C vorgetrocknet. Hiernach wurde der nicht erfindungsgemäße Klarlack in unterschiedlichen Schichtdicken aufgetragen.
Bei Vergleichsversuch V1.5a wurden die Stahltafeln während 15 Minuten bei Raumtemperatur und während 10 Minuten bei 80 °C getrocknet und anschließend bei 140 °C eingebrannt.
Bei Vergleichsversuch V1.5b wurden die Stahltafeln während 15 Minuten bei Raumtemperatur und während 45 Minuten bei 80°C getrocknet.
In beiden Fällen lag die Kochergrenze bereits bei ca. 45 Mikrometer.
Der Glanz wurde bei 20 Grad nach DIN 67530 bei dem Vergleichsversuch V1.5a zu 83,3, bei dem Vergleichsversuch V1.5b zu 84 bestimmt.

Die Grauschleier wurden mit einem Haze-Meßgerät Microglass Haze der Firma Byk-Gardner gemessen; bei Vergleichsversuch V1.5a lag der Wert bei 36,8 bei Vergleichsversuch V1.5b bei 40,2.

Die Benzinfestigkeit wurde wie bei dem Beispiel 1 getestet. Bei beiden Vergleichsversuchen V1.5a und mit V1.5b waren Markierungen zu sehen.

Der Vergleich des Beispiels mit dem Vergleichsversuch belegt die Vorteilhaftigkeit des erfindungsgemäßen Beschichtungsmittels.

## Patentansprüche

1. Aus mindestens drei Komponenten bestehendes Beschichtungsmittel, enthaltend

   (I) eine Komponente, enthaltend mindestens ein oligomeres oder polymeres Harz mit funktionellen Gruppen, die mit Isocyanatgruppen reagieren, als Bindemittel (A),

   (II) eine Komponente, enthaltend mindestens ein Polyisocyanat als Vernetzungsmittel (F), und

   (III) eine Komponente, welche aus Wasser besteht oder Wasser und mindestens ein Bindemittel (A) enthält,

   **dadurch gekennzeichnet, daß** die Komponente (I) und/oder (III) mindestens ein verzweigtes, cyclisches und/oder acyclisches $C_9$-$C_{16}$-Alkan enthält, das mit mindestens zwei Hydroxylgruppen funktionalisiert ist.

2. Das Beschichtungsmittel nach Anspruch 1, **dadurch gekennzeichnet, daß** das funktionalisierte Alkan bei Raumtemperatur flüssig ist.

3. Das Beschichtungsmittel nach Anspruch 1 oder 2, **dadurch gekennzeichnet, daß** das funktionalisierte Alkan einen Siedepunkt von über 200 °C hat.

4. Das Beschichtungsmittel nach einem der Ansprüche 1 bis 3, **dadurch gekennzeichnet, daß** das funktionalisierte Alkan acyclisch ist.

5. Das Beschichtungsmittel nach einem der Ansprüche 1 bis 4, **dadurch gekennzeichnet, daß** das funktionalisierte Alkan primäre und/oder sekundäre, insbesondere primäre und sekundäre, Hydroxylgruppen aufweist.

6. Das Beschichtungsmittel nach einem der Ansprüche 1 bis 5, **dadurch gekennzeichnet, daß** es sich bei dem funktionalisierten Alkan um ein Polyol handelt.

7. Das Beschichtungsmittel nach Anspruch 6, **dadurch gekennzeichnet, daß** die funktionalisierten Alkane Diole und/oder Triole sind.

8. Das Beschichtungsmittel nach Anspruch 7, **dadurch gekennzeichnet, daß** die Diole stellungsisomere Dialkyloctandiole, insbesondere Diethyloctandiole, sind.

9. Das Beschichtungsmittel nach Anspruch 8, **dadurch gekennzeichnet, daß** das Diol 2,4-Diethyl-octandiol-1,5 enthält oder hieraus besteht.

10. Das Beschichtungsmittel nach einem der Ansprüche 1 bis 9, **dadurch gekennzeichnet, daß** es sich bei den funktionellen Gruppen, die mit Isocyanatgruppen reagieren, um Hydroxylgruppen handelt.

11. Das Beschichtungsmittel nach einem der Ansprüche 1 bis 10, **dadurch gekennzeichnet, daß** die Komponente (I) mindestens ein in Wasser lösliches oder dispergierbares Bindemittel (A) und/oder Komponente (III) mindestens ein in Wasser gelöstes oder dispergiertes Bindemittel (A) enthalten.

12. Das Beschichtungsmittel nach Anspruch 11, **dadurch gekennzeichnet**, das die Bindemittel (A) entweder

    (i) funktionelle Gruppen, die durch Neutralisationsmittel und/oder Quaternisierungsmittel in Kationen überführt werden können, und/oder kationische Gruppen, insbesondere Sulfoniumgruppen,

oder

(ii) funktionelle Gruppen, die durch Neutralisationsmittel in Anionen überführt werden können, und/oder anionische Gruppen, insbeondere Carbonsäure- und/oder Carboxylatgruppen,
und/oder

(iii) nichtionische hydrophile Gruppen, insbesondere Poly(alkylenether)-Gruppen,

enthalten.

**13.** Das Beschichtungsmittel nach Anspruch 12, **dadurch gekennzeichnet, daß** die Bindemittel (A) Carbonsäure- und/oder Carboxylatgruppen (ii) enthalten.

**14.** Das Beschichtungsmittel nach einem der Ansprüche 1 bis 13, **dadurch gekennzeichnet, daß** in der Komponente (III) ein Teil der Bindemittel (A) oder alle Bindemittel (A) in Pulverslurry-Teilchen vorliegen.

**15.** Das Beschichtungsmittel nach Anspruch 13 oder 15, **dadurch gekennzeichnet, daß** die Komponente (I) und/oder (III) als Bindemittel (A)

(A1) mindestens ein in einem oder mehreren organischen, gegebenenfalls wasserverdünnbaren Lösemitteln lösliches oder dispergierbares, Hydroxylgruppen und Carbonsäure- und/oder Carboxlylatgruppen enthaltendes Acrylatcopolymerisat (A1) mit einem zahlenmittleren Molekulargewicht Mn zwischen 1000 und 30.000 Dalton, einer OH-Zahl von 40 bis 200 mgKOH/g und einer Säurezahl von 5 bis 150 mgKOH/g und/oder

(A2) mindestens ein in einem oder mehreren organischen, gegebenenfalls wasserverdünnbaren Lösemitteln lösliches oder dispergierbares, Hydroxylgruppen und Carbonsäure- und/oder Carboxlylatgruppen enthaltendes Polyesterharz (A2) mit einem zahlenmittleren Molekulargewicht Mn zwischen 1000 und 30.000 Dalton, einer OH-Zahl von 30 bis 250 mgKOH/g und einer Säurezahl von 5 bis 150 mgKOH/g und/oder

(A3) mindestens ein in einem oder mehreren organischen, gegebenenfalls wasserverdünnbaren Lösemitteln lösliches oder dispergierbares, Hydroxylgruppen und Carbonsäure- und/oder Carboxlylatgruppen enthaltendes Polyurethanharz (A3) mit einem zahlenmittleren Molekulargewicht Mn zwischen 1000 und 30.000 Dalton, einer OH-Zahl von 20 bis 200 mgKOH/g und einer Säurezahl von 5 bis 150 mgKOH/g

enthalten.

**16.** Das Beschichtungsmittel nach einem der Ansprüche 1 bis 15, **dadurch gekennzeichnet, daß** die Komponenten (I), (II) und/oder (III) als weiteres Vernetzungsmittel (F') mindestens eine Epoxidverbindung mit mindestens zwei Epoxidgruppen pro Molekül, mindestens ein Aminoplastharz, mindestens ein blockiertes Polyisocyanat, mindestens ein Tris(alkoxycarbonylamino)triazin, mindestens ein Siloxan und/oder mindestens ein beta-Hydroxyalkylamid enthält.

**17.** Das Beschichtungsmittel nach einem der Ansprüche 1 bis 16, **dadurch gekennzeichnet, daß** das funktionalisierte Alkan in der Komponente (I) und/oder (III) in einer Menge von 1 bis 80, vorzugsweise 5 bis 50 und insbesondere 10 bis 35 Gew.-%, jeweils bezogen auf die Gesamtmenge von Bindemittel (A) und funktionalisierten Alkanen, enthalten ist.

**18.** Verwendung der Beschichtungsmittel gemäß einem der Ansprüche 1 bis 17 in der Autoserienlackierung, der Reparaturlackierung, insbesondere der Autoreparaturlackierung, und der Beschichtung von Kunststoffen als Decklacke und/oder Füller.

## Claims

**1.** A coating composition consisting of at least three components, comprising

(I) a component comprising at least one oligomeric or polymeric resin containing functional groups which react with isocyanate groups, as binder (A),

(II) a component comprising at least one " polyisocyanate as crosslinking agent (F), and

(III) a component which consists of water or comprises water and at least one binder (A),

wherein component (I) and/or (III) comprise or comprises at least one branched, cyclic and/or acyclic $C_9$-$C_{16}$-alkane which is functionalized using at least two hydroxyl groups.

**2.** The coating composition as claimed in claim 1, wherein the functionalized alkane is liquid ti room temperature.

**3.** The coating composition as claimed in claim 1 or 2, wherein the functionalized alkane has a boiling point of more than 200°C.

**4.** The coating composition as claimed in any of claims 1 to 3, wherein the functionalized alkane is acyclic.

**5.** The coating composition as claimed in any of claims 1 to 4, wherein the functionalized alkane has primary and/or secondary, in particular primary and secondary, hydroxyl groups.

**6.** The coating composition as claimed in any of claims 1 to 5, wherein the functionalized alkane comprises a polyol.

**7.** The coating composition as claimed in claim 6, wherein the functionalized alkane are diols and/of triols.

**8.** The coating composition as claimed in claim 7, wherein the diols are positionally isomeric dialkyloctanediols, in particular diethyloctanediols.

**9.** The coating composition as claimed in claims 8, wherein the diol comprises 2,4-diethyl-1,5-octanediol or consists of the latter.

**10.** The coating composition as claimed in any of claims 1 to 9, wherein the functional groups which react with isocyanate groups comprise hydroxyl groups.

**11.** The coating composition as claimed in any of claims 1 to 10, wherein component (I) comprises at least one water soluble or dispersible binder (A) and/or component (III) comprises at least one binder (A) dispersed or dissolved in water.

**12.** The coating composition as claimed in claim 11, wherein the binders (A) comprise alternately

(i) functional groups which may be converted into cations by neutralizing agents and/or quaternizing agents, and/or cationic groups, especially sulfonium groups.
or
(ii) functional groups which can be converted into anions by neutralizing agents, and/or anionic groups, especially carboxylic acid and/or carboxylate groups,
and/or
(iii) nonionic hydrophilic groups, especially poly(alkylene ether) groups.

**13.** The coating composition as claimed in claim 12, wherein the binders (A) contain carboxylic acid and/or carboxylate groups (ii).

**14.** The coating composition as claimed in any of claims 1 to 13, wherein some of the binders (A) or all binders (A) in component (III) are in powder slurry particles.

**15.** The coating composition as claimed in claim 13 or 14, wherein component (I) and/or (III) comprise/comprises as binders (A)

(A1) at least one acrylate copolymer (A1) which is dispersible or soluble in one or more organic, optionally water dilutable solvents, contains hydroxyl groups and carboxylic acid and/or carboxylate groups, and has a number average molecular weight Mn of between 1 000 and 30 000 daltons, an OH number of from 40 to 200 mg KOH/g, and an acid number of from 5 to 150 mg KOH/g,
(A2) at least one polyester resin (A2) which is dispersible or soluble in one or more organic, optionally water

dilutable solvents, contains hydroxyl groups and carboxylic acid and/or carboxylate groups, and has a number average molecular weight Mn of between 1 000 and 30 000 daltons, an OH number of from 30 to 250 mg KOH/g, and an acid number of from 5 to 150 mg KOH/g, and/or
(A3) at least one polyurethane resin (A3) which is dispersible or soluble in one or more organic, optionally water dilutable solvents, contains hydroxyl groups and carboxylic acid and/or carboxylate groups, and has a number average molecular weight Mn of between 1 000 and 30 000 daltons, an OH number of from 20 to 200 mg KOH/g, and an acid number of from 5 to 150 mg KOH/g.

**16.** The coating composition as claimed in any of claims 1 to 15, wherein components (I), (II) and/or (III) comprise as further crosslinking agent (F') at least one epoxide compound containing at least two epoxide groups per molecule, at least one amino resin, at least one blocked polyisocyanate, at least one tris(alkoxycarbonylamino)triazine, at least one siloxane and/or at least one beta-hydroxyalkylamide.

**17.** The coating composition as claimed in any of claims 1 to 16, wherein the functionalized alkane in component (I) and/or (III) is present in an amount of from 1 to 80, preferably from 5 to 50, and in particular from 10 to 35% by weight, based in each case on the overall amount of binder (A) and functionalized alkanes.

**18.** The use of the coating composition as claimed in any of claims 1 to 17 in automotive OEM finishing, refinish, especially in automotive refinish, for coating plastics, and as topcoat materials and/or primer-surfacers.

**Revendications**

**1.** Composition de revêtement constituée d'au moins trois composants, contenant

(I) un composant contenant au moins une résine oligomère ou polymère à groupes fonctionnels qui réagissent avec des groupes isocyanate, en tant que liant (A),
(II) un composant contenant au moins un polyisocyanate, en tant qu'agent de réticulation (F), et
(III) un composant qui consiste en eau ou contient de l'eau, en tant que liant (A)

**caractérisée en ce que** le composant (I) et/ou le composant (III) contient(contiennent) au moins un alcane en $C_9$-$C_{16}$ ramifié, cyclique et/ou acyclique qui est fonctionnalisé avec au moins deux groupes hydroxy.

**2.** Composition de revêtement selon la revendication 1, **caractérisée en ce que** l'alcane fonctionnalisé est liquide à la température ambiante.

**3.** Composition de revêtement selon la revendication 1 ou 2, **caractérisée en ce que** l'alcane fonctionnalisé a un point d'ébullition de plus de 200°C.

**4.** Composition de revêtement selon l'une quelconque des revendications 1 à 3, **caractérisée en ce que** l'alcane fonctionnalisé est acyclique.

**5.** Composition de revêtement selon l'une quelconque des revendications 1 à 4, **caractérisée en ce que** l'alcane fonctionnalisé comporte des groupes hydroxy primaires et/ou secondaires, en particulier primaires et secondaires.

**6.** Composition de revêtement selon l'une quelconque des revendications 1 à 5, **caractérisée en ce que** l'alcane fonctionnalisé consiste en un polyol.

**7.** Composition de revêtement selon la revendication 6, **caractérisée en ce que** les alcanes fonctionnalisés sont des diols et/ou des triols.

**8.** Composition de revêtement selon la revendication 7, **caractérisée en ce que** les diols sont des dialkyloctanediols, en particulier des diéthyloctanediols, à isomérie de position.

**9.** Composition de revêtement selon la revendication 8, **caractérisée en ce que** le diol contient du 2,4-diéthyloctanediol-1,5 ou consiste en celui-ci.

**10.** Composition de revêtement selon l'une quelconque des revendications 1 à 9, **caractérisée en ce que** les groupes

fonctionnels qui réagissent avec des groupes isocyanate sont des groupes hydroxy.

**11.** Composition de revêtement selon l'une quelconque des revendications 1 à 10, **caractérisée en ce que** le composant (I) contient au moins un liant (A) soluble ou dispersable dans l'eau et/ou le composant (III) contient au moins un liant (A) soluble ou dispersable dans l'eau.

**12.** Composition de revêtement selon la revendication 11, **caractérisée en ce que** les liants (A) contiennent soit

(I) des groupes fonctionnels qui peuvent être convertis en cations au moyen d'agents de neutralisation et/ou d'agents de quaternisation, et/ou des groupes cationiques, en particulier des groupes sulfonium,
soit
(II) des groupes fonctionnels qui peuvent être convertis en anions au moyen d'agents de neutralisation et/ou des groupes anioniques, en particulier des groupes carboxy et/ou carboxylate,
et/ou
(III) des groupes hydrophiles non ioniques, en particulier des groupes poly(alkylène-éther).

**13.** Composition de revêtement selon la revendication 12, **caractérisée en ce que** les liants (A) contiennent des groupes carboxy et/ou carboxylate (II).

**14.** Composition de revêtement selon l'une quelconque des revendications 1 à 13, **caractérisée en ce que**, dans le composant (III), une partie du liant (A) ou tous les liants (A) sont présents dans des particules de suspension de poudre.

**15.** Composition de revêtement selon la revendication 13 ou 14, **caractérisée en ce que** le composant (I) et/ou le composant (III) contient(contiennent) en tant que liant (A)

(A1) au moins un copolymère d'acrylate (A1) contenant des groupes hydroxy et des groupes carboxy et/ou carboxylate, soluble ou dispersable dans un ou plusieurs solvants organiques éventuellement diluables à l'eau, et ayant une masse moléculaire moyenne en nombre Mn comprise entre 1 000 et 30 000 daltons, un indice de groupes OH allant de 40 à 200 mg de KOH/g et un indice d'acide allant de 5 à 150 mg de KOH/g, et/ou
(A2) au moins une résine polyester (A2) contenant des groupes hydroxy et des groupes carboxy et/ou carboxylate, soluble ou dispersable dans un ou plusieurs solvants organiques éventuellement diluables à l'eau, et ayant une masse moléculaire moyenne en nombre Mn comprise entre 1 000 et 30 000 daltons, un indice de groupes OH allant de 30 à 250 mg de KOH/g et un indice d'acide allant de 5 à 150 mg de KOH/g, et/ou
(A3) au moins une résine polyuréthanne (A3) contenant des groupes hydroxy et des groupes carboxy et/ou carboxylate, soluble ou dispersable dans un ou plusieurs solvants organiques éventuellement diluables à l'eau, et ayant une masse moléculaire moyenne en nombre Mn comprise entre 1 000 et 30 000 daltons, un indice de groupes OH allant de 20 à 200 mg de KOH/g et un indice d'acide allant de 5 à 150 mg de KOH/g.

**16.** Composition de revêtement selon l'une quelconque des revendications 1 à 15, **caractérisée en ce que** les composants (I), (II) et/ou (III) contient(contiennent) comme autre agent de réticulation (F') au moins un époxyde comportant au moins deux groupes époxy par molécule, au moins un aminoplaste, au moins un polyisocyanate bloqué, au moins une tris(alcoxycarbonylamino)triazine, au moins un siloxane et/ou au moins un β-hydroxyalkylamide.

**17.** Composition de revêtement selon l'une quelconque des revendications 1 à 16, **caractérisée en ce que** l'alcane fonctionnalisé est contenu dans le composant (I) et/ou le composant (III) en une quantité de 1 à 80, de préférence de 5 à 50 et en particulier de 10 à 35 % en poids, chaque fois par rapport à la quantité totale du liant (A) et des alcanes fonctionnalisés.

**18.** Utilisation de la composition de revêtement selon l'une quelconque des revendications 1 à 17, dans le peinturage en série d'automobiles, dans le peinturage de réparation, en particulier dans le peinturage de réparation d'automobiles, et dans le revêtement de matières plastiques, en tant que peinture de finition et/ou apprêt de garnissage.